# EUROPÄISCHE PATENTSCHRIFT

(11) **EP 1 522 910 B1**
(45) Veröffentlichungstag und Bekanntmachung des Hinweises auf die Patenterteilung: **30.01.2008**
(21) Anmeldenummer: 04024001.2
(22) Anmeldetag: 08.10.2004
(51) Int. Cl.: G05B 19/042

(54) **Verfahren und Einrichtung zur Konfiguration eines Steuerungssystems**
Method and system for configuring a control system
Méthode et système pour configurer un système à commande

(30) Priorität: 10.10.2003 DE 10347891
(43) Veröffentlichungstag der Anmeldung: 13.04.2005
(73) Patentinhaber: dspace digital signal processing and control engineering GmbH, 33100 Paderborn (DE)
(72) Erfinder: Eckmann, Martin, 58840 Plettenberg (DE); Erbacher, Rafael, 33102 Paderborn (DE); Kronmüller, Martin, Dr.-Ing., 33098 Paderborn (DE); Mertens, Frank, 33175 Bad Lippspringe (DE); Otterbach, Rainer, Dr.-Ing., 33189 Schlangen (DE); Schmitz, Elmar, 33142 Büren (DE); Stolpe, Ralf, 33161 Hövelhof (DE)
(74) Vertreter: Gesthuysen, Hans Dieter

(56) Entgegenhaltungen:
- US-A- 5 168 441
- US-B1- 6 477 435

## Beschreibung

Die Erfindung betrifft ein Verfahren zur Erzeugung eines ausführbaren Gesamt-Steuerungsprogramms, insbesondere eines Meß-, Steuer-, Regel- und/oder Kalibrierungsprogramms, zur Steuerung eines Steuerungssystems mit mindestens einer elektronischen Rechnereinheit sowie mindestens einem zugeordneten I/O-Gerät, wobei mit Hilfe eines durch eine grafische Modellierungsumgebung erstellten Blockdiagramms, dessen Blöcke durch Signallinien zur Übertragung von Signalen verbunden werden, ein Funktions-Steuerungsprogramm erzeugt wird, ein diesbezügliches Computerprogramm sowie eine Konfigurationseinrichtung zur Erzeugung eines I/O-Steuerungsprogramms und ein diesbezügliches Computerprogramm.

Verfahren zur automatischen oder teilautomatisierten Erzeugung von Programmen für Steuerungssysteme unter Verwendung von Blockdiagrammen aus grafischen Modellierungsumgebungen sind aus der Praxis bekannt und werden vor allem in angewandter Forschung und industrieller Entwicklung in dem weiten Feld der Entwicklung und dem Einsatz elektronischer Steuerungssysteme verwendet, insbesondere in den Bereichen Mechatronik, automotive Anwendungen (hier werden Steuerungssysteme vorzugsweise als Steuergeräte bezeichnet), in der Luft- und Raumfahrt, in Anlagen- und Verfahrenstechnik und sonstigen technischen Gebieten, in denen im weitesten Sinne Prozeßsteuerungsaufgaben gelöst werden müssen.

Der Begriff "Steuerungssystem" wird im folgenden als umfassende Bezeichnung für eine technische Einrichtung verwendet, die im Wesentlichen für oben beschriebene Aufgaben (Messen, Steuern, Regeln, Kalibrieren) in den genannten Feldern eingesetzt wird; im weiteren Sinne kann es sich generell um ein elektronisches, programmsteuerbares System handeln. Der Begriff ist nicht auf das beschränkt, was im systemtheoretischen Sinne einengend als Steuerung definiert wird. Nachfolgend wird auf einen Regler als Beispiel für ein Steuerungssystem Bezug genommen.

Zur Herleitung und Erläuterung des Erfindungsgedankens ist es hilfreich, grundlegende Begriffe und typische Arbeitsprozesse auf diesem Gebiet zunächst zu erläutern. Das Endziel der planmäßigen Steuerung eines beliebigen technischen Prozesses wird im wesentlichen über die - oder einen Teil der - folgenden Stationen erreicht: Reglerentwurf durch Simulation (Funktions-Entwicklung), Test des Regelungskonzepts im realen Prozeß mit einem leistungsfähigen Entwicklungs-Steuerungssystems (Rapid Control Prototyping, RCP), (automatisiertes) Übertragen des Regelungsalgorithmus auf ein Produktions-Steuergerät, Test des Regelungsalgorithmus mit dem Serien-Steuergerät in einer teilweise oder vollständig simulierten Außenwelt (Hardware-in-the-Loop Test, HIL) und letztendlich Feinabstimmung der Regelungsparameter unter Verwendung eines Serien-Steuergeräts durch die sogenannte Kalibrierung.

In der Funktions-Entwicklung wird mit Hilfe einer computergestützten grafischen Modellierungsumgebung zunächst ein mathematisches Modell des zu beeinflussenden oder zu untersuchenden technischen Prozesses sowie des einzusetzenden Reglers erstellt. Üblicherweise erfolgt die Modellierung in diesen grafischen Umgebungen mit den Mitteln der aus der Systemtheorie bekannten Blockschaltbilddarstellung, bei der einzelnen Blöcken eine bestimmte mathematische Funktionalität zukommt, von simplen algebraischen Operationen bis hin zu kompliziertem dynamischen Verhalten. Blöcke eines Blockdiagramms werden durch Signallinien miteinander verbunden, und eingangsseitige Signale eines Blocks werden bei der Übertragung durch einen solchen Block beispielsweise miteinander verknüpft und/oder ihnen wird ein bestimmtes Zeitverhalten aufgeprägt, und die Ergebnisse dieser Transformationen werden im allgemeinen durch ausgangsseitige Signale für eine weitere Verwendung ausgegeben.

Die Modellierungsumgebungen bieten häufig neben der reinen Modellerstellung auch die Möglichkeit der numerischen Simulation des Blockdiagramms, und so ist es beispielsweise möglich, mit Hilfe eines Prozeßmodells verschiedene Regelungsalgorithmen durch Simulation, ohne physikalische Verbindung zum realen Prozeß, zu entwerfen und auszutesten. Dieser abstrakte Teil eines Modells/Blockdiagramms wird im folgenden als Funktions-Modell bezeichnet.

Zum Einsatz des in der Simulation entwickelten Regelungskonzepts im realen Prozeß muß der Regelalgorithmus in ein Programm für ein Steuerungssystem, das mit dem zu steuernden Prozeß über entsprechende I/O-Geräte verbunden ist, übertragen und durch Anweisungen ergänzt werden, um die I/O-Geräte überhaupt ansprechen zu können.

Unter I/O-Gerät wird im Rahmen der Lehre dieser Erfindung eine große Bandbreite an möglichen technischen Geräten mit einer oder mehreren Außenwelt-Schnittstellen verstanden. Neben den üblichen Geräten mit analogen und digitalen Ein- und Ausgabekanälen zählen dazu u. a. auch Geräte mit intelligenter Signalverarbeitung zum Pre- und Postprocessing von (Roh-)Daten, Datenbus-Module, Geräte zur Signalkonditionierung, aber z. B. auch Leistungsmodule. Ein I/O-Gerät kann gerätetechnisch eine separate Einheit bilden, die einer Rechnereinheit hinzugefügt werden kann (beispielsweise interner Bussteckplatz in der Rechnereinheit, Ankopplung über eine externe Kommunikationsschnittstelle), es kann aber auch untrennbarer Bestandteil einer Rechnereinheit sein, z. B. wenn in einem Prozessor I/O-Gerätefunktionalität integriert umgesetzt ist. Die Lehre der Erfindung ist grundsätzlich auf keine spezielle gerätetechnische Ausführungsform beschränkt, oder von einer solchen abhängig.

Ein solches Programm, das sowohl funktionale Berechnungsanteile, z. B. aus dem Funktions-Modell, wie auch Anteile zur Beeinflussung von Hardware-komponenten (z. B. I/O-Geräte) umfaßt und auf einem Steuerungssystem betrieben werden kann, wird im folgenden als Gesamt-Steuerungsprogramm bezeichnet.

In der Praxis werden die Modellierungsumgebung einerseits und das Gesamt-Steuerungsprogramm andererseits häufig auf unterschiedlichen Rechnereinheiten betrieben: Modellierungsumgebungen werden üblicherweise auf PCs oder Workstations mit verbreiteten Standardbetriebssystemen ausgeführt und Gesamt-Steuerungsprogramme auf Rechnereinheiten, die mit einem Echtzeitbetriebssystem ausgestattet sind, um Regelungsaufgaben synchron mit der physikalischen Zeit ausführen zu können.

Die Übertragung des Funktions-Modells, oder eines Teils von ihm, in ein Programm für ein Steuerungssystem besteht, wie oben angedeutet, nicht nur aus der programmtechnischen Nachbildung der mathematischen Berechnungen (Funktions-Modell), sondern es müssen darüber hinaus die über die I/O-Geräte einzulesenden physikalischen Größen, wie auch die über die I/O-Geräte auszugebenden Stellgrößen in dem Gesamt-Steuerungsprogramms berücksichtigt und entsprechende Funktionsaufrufe an geeigneter Stelle im Programmverlauf vorgesehen werden, die z. B. entsprechende Softwarebibliotheken mit Treiber-Funktionalität für die I/O-Geräte benutzen.

Die Bewältigung dieser Aufgabe durch Handprogrammierung ist ausgesprochen fehleranfällig, zeitaufwendig, kostenintensiv und wird in der Praxis daher weitestgehend automatisiert, indem schon in der Modellierungsumgebung die Schnittstellen zu den I/O-Geräten modelliert werden. Zu diesem Zweck werden ergänzende Blockbibliotheken zur Beschreibung der I/O-Geräte und des Steuerungssystems benutzt, wobei verschiedene Blöcke unterschiedliche I/O-Geräte, Komponenten von ihnen (z. B. Kanäle von Digital-Analog-Wandlern, digitale I/O-Kanäle) und z. T. komplexe parametrierbare Module (z. B. Datenbusse und Definition der durch sie übertragenen Nachrichten und ihres Timingverhaltens, Generierung/Analyse von Signalverläufen durch digitale Signalprozessoren) repräsentieren, deren Eigenschaften in der Modellierungsumgebung bzw. dem Blockdiagramm, z. B. durch Dialogfenster oder ähnliche Mittel, einstellbar sind. Der Anteil eines Blockdiagramms, der im weitesten Sinne den Einsatz von I/O-Geräten spezifiziert, wird im folgenden mit I/O-Modell und die in diesem Modellteil verwendeten Blöcke als I/O-Blöcke bezeichnet. Zu den I/O-Blöcken sollen all jene Blöcke gezählt werden, die zur Beeinflussung von Hardware-Komponenten verwendet werden, selbst wenn es schwerpunktmäßig keine I/O-Geräte sind (z. B. reine Rechnereinheiten in Multiprozessorsystemen oder Rechnereinheiten als Bestandteil intelligenter I/O-Geräte, die zur Bewältigung ihrer Aufgaben beispielsweise auf Slave-Prozessoren zurückgreifen).

I/O-Blöcke werden in die Signallinien eingefügt, deren Signale durch die I/O-Geräte des Steuerungssystems ausgegeben oder eingelesen werden sollen. Aus diesem Grund sind Funktions-Modell und I/O-Modell in dem beschriebenen Verfahren, von dem die Erfindung ausgeht, untrennbar miteinander verwoben, auch wenn die hier gemachte begriffliche Trennung eventuell den Eindruck zweier sauber voneinander trennbarer/getrennter Modellteile vermittelt.

Mit Hilfe eines Übersetzungsprogramms ist es dann möglich, das Blockdiagramm, oder Teile von ihm, in ein auf dem Steuerungssystem ausfiihrbares Gesamt-Steuerungsprogramms zu überführen, häufig mit dem Zwischenschritt der Codegenerierung aus dem Blockdiagramm, anschließender Kompilierung des Codes durch einen für das Steuerungssystem geeigneten Compiler und ggf. dem Linken benötigter Software-Module zu einer ausführbaren Einheit. Blockdiagramme können auch durch ein geeignetes Übersetzungsprogramm in eine Interpreter-Sprache überführt werden, das von einem korrespondierenden Interpreter ausgeführt wird. Die hierzu benötigten Werkzeuge können Bestandteil der Modellierungsumgebung sein, sie können aber auch separate Anwendungen darstellen, wobei Informationen über das Blockdiagramm dann z. B. dateibasiert ausgetauscht oder aber Programmierschnittstellen der Modellierungsumgebung verwendet werden.

Gängige Praxis ist es, die Rechnereinheit zum Betrieb der Modellierungsumgebung und des Übersetzungsprogramms (Hostrechner) und die Rechnereinheit zum Betrieb des Gesamt-Steuerungsprogramms (Zielrechner) durch geeignete Kommunikationsschnittstellen miteinander zu verbinden, mit dem Vorteil, daß in der Modellierungsumgebung entwickelte Regelungskonzepte inklusive einer entsprechenden Beschreibung der verwendeten I/O-Geräte, ihrer Parametrierung und der durch sie übermittelten Signale aus dem Hostsystem vollautomatisiert in ein Gesamt-Steuerungsprogramm übersetzt werden können, das über die Kommunikationsschnittstellen auf das Zielsystem geladen und dort ausgeführt werden kann.

Das oben beschriebene Verfahren zusammen mit der Vernetzung der Systemkomponenten macht den eigentlichen Vorteil des Rapid Control Prototyping aus. Vergleichbare Verfahren und vernetzte Architekturen von Rechnereinheiten und I/O-Geräten werden auch eingesetzt bei Hardware-in-the-Loop Tests, bei der alleinigen oder auch ergänzenden Durchführung von Meßaufgaben (Datenakquisition) und bei der Kalibrierung von Regelungsparametern in abgeschlossenen Steuerungssystemen (z. B. Serien-Steuergeräte), in denen Rechnereinheit und zugeordnete I/O-Geräte oft in einer gerätetechnischen Einheit ausgeführt sind.

Systeme, die den oben beschriebenen Arbeitsprozeß unterstützen, gehören zum Stand der Technik, von dem die Erfindung ausgeht (dSPACE GmbH: Produktkatalog 2003 "Solutions for Control"; Produktdokumentation für dSPACE Release 4.0, August 2003, insbesondere "Real-Time Interface (RTI), Release 4.0 Implementation Guide" (u. a. blockbasierte Modellierung von I/O-Geräten und Zielrechnern, Code-Generierung für diese Blockbibliotheken), TargetLink 2.0 (u. a. Codegenerierung für (Serien-)Steuergeräte aus Blockdiagrammen); oder The MathWorks: Produktdokumentationen für Release 13, insbesondere MATLAB & Simulink (Umgebung zur mathematischen, blockbasierten Modellbildung und Simulation), "Real-Time Workshop 5, User's Guide" (Codegenerierung aus Blockdiagrammen), xPC Target 2 (Blöcke für modellbasierte I/O-Gerätebeschreibung, Codegenerierung für I/O-Geräte, Echtzeitbetriebssystem für PC-Hardware)).

Aus der US 5,168,441 A ist ein weiteres System bekannt, das den Systemen der zuvor beschriebenen Art ähnlich ist; auch hier wird das Funktions- und das I/O-Modell in einer Entwicklungebung modelliert und beide Modellbestandteile werden zusammen in ein gemeinsames Gesamt-Steuerungsprogramm übersetzt.

Das bekannte, zuvor beschriebene Verfahren zur Erzeugung eines Gesamt-Steuerungsprogramms durch Übersetzung eines in einem Blockdiagramm kombinierten Funktions- und I/O-Modells weist jedoch einige gravierende Nachteile auf.

Die gleichzeitige Bearbeitung des abstrakten Regelungsalgorithmus' für einen bestimmten Prozeß zum einen und der I/O-Geräte und deren Parametrierung zum anderen entspricht häufig nicht der Praxis, da sich insbesondere in umfangreicheren Entwicklungsprojekten unterschiedliche Entwicklergruppen mit den Fragestellungen des Reglerentwurfs einerseits und den Fragestellungen der Auslegung einer bestimmten Hardware (I/O-Geräte) andererseits befassen. Bei der Entwicklung von Regelungskonzepten in Form des Funktions-Modells ist die Auswahl der späteren Steuergerätehardware und die spezielle Parametrierung von I/O-Geräten zunächst von untergeordneter Bedeutung, wichtig ist, daß bestimmte Signale als auf den Prozeß einwirkende oder von dem Prozeß einzulesende Größen erkannt werden. Im Gegensatz dazu ist es für die Entwicklung einer geeigneten Hardware zur Beeinflussung des realen Prozesses in erster Linie wichtig zu wissen, welche Signale als Ein- und Ausgangsgrößen zwischen Prozeß- und Steuerungssystem zu übertragen sind, so daß die Zusammenstellung und Parametrierung eines geeigneten Steuerungssystems auch ohne Bezug zum Funktions-Modell und erst recht ohne Bezug zur Modellierungsumgebung durchgeführt werden kann.

Ein weiterer Nachteil der Mischung von Funktions-Modell und I/O-Modell besteht darin, daß die Übertragung des Blockdiagramms in ein auf dem Steuerungssystem lauffähiges Gesamt-Steuerungsprogramm unter gleichzeitiger Berücksichtigung von hardwareabhängigen und hardwareunabhängigen Modellteilen geschieht. In der Praxis kommt es häufig vor, daß zwar der abstrakte Berechnungsteil eines Modells nicht mehr geändert wird (Funktions-Modell), wohl aber die Konfiguration der Hardware des Steuerungssystems (I/O-Modell), also z. B. die Parametrierung von Digital/Analog-Wandlern, von Signalkonditionierungskanälen etc. In diesem Fall müssen alle Bestandteile des Blockdiagramms von neuem übersetzt werden, obwohl sich nur ein geringer Teil, nämlich I/O-Blöcke oder deren Einstellung, geändert hat. Bei größeren Anlagen mit mehreren vernetzten Steuergeräten (Multiprozessor-Systeme) mit entsprechend großen Modellbeschreibungen und Blockdiagrammen mit einem Umfang von mehreren zehntausend Blöcken, kann ein solcher Übersetzungsvorgang mehrere zehn Stunden in Anspruch nehmen, was für kurze industrielle Entwicklungszyklen unakzeptabel ist.

Eine ähnliche Problematik ergibt sich, wenn das gleiche Funktions-Modell mit einer anderen oder auch nur geringfügig erweiterten/reduzierten Hardware eingesetzt werden soll, was zunächst die Konsequenz hat, daß alle betroffenen I/O-Blöcke des bestehenden Blockdiagramms durch jene I/O-Blöcke ausgetauscht werden müssen, die zu der neuen Hardware passen. Auch in diesem Fall muß das gesamte Blockdiagramm neu in ein Gesamt-Steuerungsprogramm übersetzt werden, wenngleich sich am algorithmischen Teil, also dem Funktions-Modell, nichts geändert hat.

Ein weiterer Nachteil der blockbasierten Beschreibung von Hardware des Steuerungssystems ist, daß die I/O-Blöcke über das gesamte Modell hinweg verteilt sind und nicht in ihrer Gesamtheit konzentriert zur Verfügung stehen. Viele der bekannten Modellierungsumgebungen ermöglichen es, ein Blockdiagramm durch Schaffung von übergeordneten, untergeordneten und miteinander verschachtelten Blockeinheiten zu strukturieren und zu hierarchisieren, was sich auf alle beschriebenen Arbeitszenarien aufgrund der erschwerten Bedingungen für das Auffinden von I/O-Blöcken gleichermaßen hinderlich auswirkt.

Der Erfindung liegt nun die Aufgabe zugrunde, ein Verfahren und eine Vorrichtung zur Erzeugung eines ausführbaren Gesamt-Steuerprogramms bzw. zur Erzeugung eines I/O-Steuerungsprogramms anzubieten, bei dem die oben genannten Nachteile - zumindest teilweise - vermieden werden.

Die obige Aufgabe wird durch ein Verfahren gemäß Anspruch 1, ein Computerprogramm gemäß Anspruch 23 oder eine Konfigurationseinrichtung gemäß Anspruch 25 und ein diesbezügliches Computerprogramm gemäß Anspruch 26 gelöst. Vorteilhafte Weiterbildungen sind Gegenstand der Unteransprüche.

Das erfindungsgemäße Verfahren sieht dazu vor, daß das mit der graphischen Modellierungsumgebung erstellte Blockdiagramm vorzugsweise zur I/O-Geräte-unabhängigen Modellierung der Prozeß- und Reglerfunktionalität dient (Funktions-Modell) und im Blockdiagramm selbst insbesondere keine Angaben zur Parametrierung von I/O-Geräten gemacht werden müssen. Das Verfahren sieht lediglich vor, daß die Signale des Modells, die im späteren Einsatz tatsächlich von einem I/O-Gerät ausgegeben oder eingelesen werden sollen, im Blockdiagramm als I/O-Zugriffspunkte gekennzeichnet werden. Die im Blockdiagramm vorgenommenen symbolischen und hardwareunabhängigen Markierungen von I/O-Zugriffspunkten werden im folgenden als Modell-I/O-Zugriffspunkte bezeichnet.

Es ist möglich, zur Kennzeichnung eines Signals des Blockdiagramms als Modell-I/O-Zugriffspunkt ein beliebiges Mittel, das die graphische Modellierungsumgebung zur Verfügung stellt, zu nutzen, wobei die Kennzeichnung eines Signals funktionsneutral sein sollte, d. h. die Kennzeichnung eines Modell-I/O-Zugriffspunktes im Blockdiagramm darf das Übertragungsverhalten für das gekennzeichnete Signal, wie auch des Gesamtsystems nicht verändern. Die Kennzeichnung ist allerdings ausdrücklich nicht auf die Möglichkeiten der verwendeten Modellierungsumgebung beschränkt. Genauso ist es denkbar, daß das Blockdiagramm von anderen, von der ursprünglichen Modellierungsumgebung abweichenden Anwendungen eingelesen, dargestellt und mit Modell-I/O-Zugriffspunkten versehen wird.

Für das erfindungsgemäße Verfahren ist es darüberhinaus unerheblich, wo sich die Signallinie bzw. das als symbolischer, hardwareunabhängiger Modell-I/O-Zugriffspunkt zu kennzeichnende Signal in dem Blockdiagramm befindet; diese zu kennzeichnenden Elemente können sich also auf der obersten Gliederungsebene und/oder auf einer darunterliegenden Gliederungsebene des Blockschaltbildes befinden.

Das Verfahren sieht weiterhin vor, daß mit Hilfe eines Übersetzungsprogramms das in der beschriebenen Art und Weise instrumentierte Blockdiagramm unabhängig von dem Steuerungssystem und/oder dem I/O-Gerät und deren Eigenschaften in ein Funktions-Steuerungsprogramm übersetzt wird. Erfindungsgemäß weist das Funktions-Steuerungsprogramm Programm-I/O-Zugriffspunkte auf, die durch die Modell-I/O-Zugriffspunkte des Blockdiagramms verursacht werden und mit ihnen korrespondieren. Das Funktions-Steuerungsprogramm selbst enthält folglich keine Informationen, welche spezifische Hardware anzusprechen ist, noch wie irgendeine Hardware parametriert ist, es enthält lediglich in seinem Verlauf verschiedene, inhaltlich nicht weiter belegte Programm-I/O-Zugriffspunkte, die nur einen I/O-Gerätezugriff an sich kennzeichnen, nicht aber die genaue Art des Zugriffs. Das Funktions-Steuerungsprogramm ist so beschaffen, daß es auf dem später zum Einsatz kommenden Steuerungssystem bzw. der Rechnereinheit des Steuerungssystems ausführbar ist.

Das Verfahren sieht erfindungsgemäß darüber hinaus den Einsatz einer Konfigurationsumgebung vor, mit deren Hilfe das Steuerungssystem und die dem Steuerungssystem zugeordneten I/O-Geräte erkannt, dargestellt und parametriert werden können.

Um ein Erkennen von Steuerungssystem und I/O-Gerät zu ermöglichen ("Scannen" der Hardwareumgebung), ist die Konfigurationsumgebung mit einer Schnittstelle versehen, um auf das Steuerungssystem und auf die dem Steuerungssystem zugeordneten I/O-Geräte zuzugreifen. Die Schnittstelle ist vorzugsweise so ausgestaltet, daß sowohl das Szenario des Betriebs der Konfigurationsumgebung auf dem Steuerungssystem, wie auch des Betriebs der Konfigurationsumgebung auf einer anderen Rechnereinheit abseits des Steuerungssystems, die mit dem Steuerungssystem über Kommunikationsschnittstellen in Verbindung steht, Berücksichtigung findet. Für den Fall, daß keine Verbindung zum Steuerungssystem existiert, oder an das Steuerungssystem kein I/O-Gerät angeschlossen ist oder es aus anderen Gründen benutzerseitig erwünscht ist, ermöglicht die Konfigurationsumgebung insbesondere die benutzerseitige Eingabe eines zunächst angenommenen Steuerungssystems mit zugeordnetem I/O-Gerät. Durch diese Maßnahme erhält das Verfahren die besonders vorteilhafte Eigenschaft, daß die Auslegung und Parametrierung eines Steuerungssystems und zugeordnetem I/O-Gerät unabhängig von tatsächlich vorhandener Hardwareausstattung erfolgen kann.

Nach abgeschlossener Erkennung/Festlegung der hardwaremäßigen Konfiguration des Steuerungssystems und der zugeordneten I/O-Geräte erfolgt erfindungsgemäß die Parametrierung der Eigenschaften dieser Einheiten durch den Benutzer. Hierunter ist z. B. zu verstehen: die einfache Festlegung des Meßbereichs eines Analog/Digital-Wandlers, aber auch die Festlegung komplexerer I/O-Geräte-Funktionen, an denen beispielsweise mehrere I/O-Geräte-Kanäle beteiligt sind, wie die Erkennung von Encoder-Signalen, Erkennen/Ausgabe (mehrphasiger) pulsweiten-modulierter Signale bis hin zur Konfiguration eines kompletten Datenbusses inklusive der Definition versandter Nachrichten.

Unter Parametrierung soll in diesem Zusammenhang ausdrücklich auch die Festlegung von Signalpfaden zwischen verschiedenen Elementen des Steuerungssystems und der I/O-Geräte verstanden werden ("Routen" von Signalpfaden). Dies ist insbesondere für Steuerungssysteme interessant, die neben elementaren I/O-Geräten beispielsweise auch I/O-Geräte für die Signalkonditionierung (z. B. Wandlung von Stromsignalen in Spannungssignale, Wandlung von eingangsseitigen Signalen eines bestimmten Bereichs in ausgangsseitigen Signale eines anderen Bereichs) und/oder Leistungsmodule (z. B. Ausgabe von hohen elektrischen Strömen oder Spannungen) umfassen. Bei entsprechend flexibler Hardware-Architektur eines Steuerungssystems wird mittels der erfindungsgemäßen Konfigurationseinrichtung definiert, welcher Kanal eines I/O-Geräts (z. B. eines Digital/Analog-Wandlers) auf welchen eingangsseitigen Kanal eines I/O-Geräts zur Ausgabe von Leistungssignalen geführt wird, auf welchen ausgangsseitigen Kanal dieses I/O-Geräts das Leistungssignal ausgegeben wird und über welchen Pin eines Konnektors (z. B. Pin eines Steckers) das Signal letztendlich abgegriffen werden kann; sinngemäß wird mit einzulesenden Signalen verfahren. Insbesondere bei der Arbeit mit großen Steuerungssystemen, wie sie z. B. bei HIL-Prüfständen zum Einsatz kommen, bietet diese Eigenschaft erhebliche Vorteile gegenüber einer nicht konfigurierbaren festen Verdrahtung von Steuerungssystemen. Allgemein formuliert bildet die erfindungsgemäße Konfigurationsumgebung alle parametrierbaren Eigenschaften der verwendeten Hardware des Steuerungssystems und der I/O-Geräte ab, was ausdrücklich nicht auf die hier genannten Beispiele beschränkt ist.

Mit der verfahrensgemäß eingesetzten Konfigurationsumgebung wird vorzugsweise festgelegt, welche Komponenten der I/O-Geräte (z. B. einzelne Kanäle eines I/O-Geräts) und Parameter der I/O-Geräte zu Laufzeit des Gesamt-Steuerungsprogramms genutzt werden, bzw. veränderlich sind. Die als zur Laufzeit genutzt beziehungsweise als veränderlich/veränderbar gekennzeichneten I/O-Geräteeigenschaften werden im folgenden als I/O-Ports bezeichnet.

Die Konfigurationsumgebung ist vorzugsweise weiterhin so ausgestaltet, daß über eine Modell-Schnittstelle das mit einer graphischen Modellierungsumgebung erstellte Blockdiagramm eingelesen wird und die in einem früheren Verfahrensschritt als Modell-I/O-Zugriffspunkte gekennzeichneten Signale beziehungsweise Signallinien als solche erkannt und dargestellt werden. Die Modell-Schnittstelle liest Blockdiagramme insbesondere dateibasiert und/oder über eine eigene Programmierschnittstelle bzw. unter Nutzungen einer Programmierschnittstelle der Modellierungsumgebung ein. Die Konfigurationsumgebung ist zusammen mit der Modell-Schnittstelle vorzugsweise sogar so ausgeführt, daß auch nicht als Modell-I/O-Zugriffspunkte gekennzeichnete Signale des Blockdiagramms angezeigt und dann in der Konfigurationsumgebungen erst als Modell-I/O-Zugriffspunkte definiert werden können, um dann von der Konfigurationsumgebung - dateibasiert und/oder über eine Programmierschnittstelle - in das Blockdiagramm übertragen zu werden.

Unter Nutzung der bis zu diesem Verfahrensschritt verfügbaren Informationen wird mit Hilfe der Konfigurationsumgebung eine eindeutige Zuordnung von I/O-Ports der I/O-Geräte auf die Modell-I/O-Zugriffspunkte des Blockdiagramms vorgenommenen und damit festgelegt, welche Modell-I/O-Zugriffspunkte und die damit korrespondierenden Programm-I/O-Zugriffspunkte welche genau spezifizierte I/O-Funktionalität eines bestimmten I/O-Geräts ansprechen sollen.

Erfindungsgemäß erzeugt das Verfahren mit Hilfe der Konfigurationsumgebung ein I/O-Steuerungsprogramm, das zusammen mit dem oben beschriebenen Funktions-Steuerungsprogramm ein auf dem Steuerungssystem lauffähiges Gesamt-Steuerungsprogramm bildet, wobei das Funktions-Steuerungsprogramm über seine Programm-I/O-Zugriffspunkte auf Elemente des I/O-Steuerungsprogramms zugreift, und die Elemente des I/O-Steuerungsprogramms den Zugriff auf das Steuerungssystems und die ihm zugeordneten I/O-Geräte realisieren.

Eine vorteilhafte Ausgestaltung der Erfindung, der besondere Bedeutung zukommt, wird im folgenden erläutert.

Bei den bekannten Verfahren besteht ein weiteres Problem, das unweigerlich mit der Erzeugung eines auf dem Steuerungssystem ausführbaren Gesamt-Steuerungsprogramms aus einem Blockdiagramm verbunden ist, in der durch die Signalflußrichtung im Blockdiagramm festgelegten Bearbeitungsreihenfolge von Blöcken des Blockdiagramms, die im folgenden als signalflußgetriebene Bearbeitungsreihenfolge bezeichnet werden soll.

Schon aus der Anschauung ist klar, daß das Ausgangssignal eines Blocks in einem Berechnungsintervall nur dann aktuell und korrekt berechnet werden kann, wenn eingangsseitig auch die für diesen Berechnungsdurchgang aktuellen Signale schon vorliegen und nicht etwa nur Signale des vorhergehenden Berechnungsintervalls oder etwa teilweise alte und teilweise aktuelle Signale. Unter einem Berechnungsdurchgang ist hier ganz allgemein das zu verstehen, was im Bereich der Abtastsysteme innerhalb eines Abtastschrittes an Berechnungen durchgeführt wird, oder was im Bereich der numerischen Mathematik an Berechnungen durchzuführen ist, um - ausgehend von dem Systemzustand **x**ᵢ - den Systemzustand des folgenden Berechnungsintervalls - also **x**ᵢ₊₁ - zu berechnen.

Durch die mit Signallinien verbundenen Blöcke des Blockdiagramms wird also ein Signalfluß festgelegt, der funktionsnotwendig eine bestimmte Bearbeitungs- bzw. Berechnungsreihenfolge der untereinander verbundenen Blöcke des Blockdiagramms festlegt, was folgerichtig und ebenfalls funktionsnotwendig dazu führt, daß das aus dem Blockschaltbild generierte Gesamt-Steuerungsprogramm die korrespondierenden Berechnungen ebenfalls in der aufgezeigten Reihenfolge durchführt, bzw. daß der zur Ausführung kommende, aus dem Blockschaltbild generierte Code eben diese durch den Signalfluß bestimmte Berechnungsreihenfolge widerspiegelt. Zur Klarstellung ist zu bemerken, daß es bei der Bestimmung einer signalflußgetriebenen Berechnungsreihenfolge keineswegs nur eine richtige Bearbeitungsreihenfolge gibt, sondern es existieren häufig mehrere richtige alternative Lösungsmöglichkeiten, die im Einklang mit den Erfordernissen solcher signalflußgetriebenen Bearbeitungsreihenfolgen stehen.

Die Vorschriften, anhand derer zu entscheiden ist, in welcher Reihenfolge Blöcke eines Blockdiagramms sinnvollerweise zu berechnen sind, sind im Stand der Technik weithin bekannt (siehe z. B. The MathWorks: Produktdokumentation für Release 14, "Simulink, Simulation and Modell-Based Design; Using Simulink, Version 6", Kapitel: "Simulating Dynamic Systems / Determining Block Update Order").

In einem blockbasierten, kombinierten Funktions- und I/O-Modell sind I/O-Blöcke - wie oben beschrieben - in den Signalverlauf des Funktions-Modells integriert. Die Ausführung der mit den I/O-Blöcken verbundenen Funktionalität unterliegt den gleichen Gesetzmäßigkeiten zur Bestimmung der Berechnungsreihenfolge, die auch für die Funktions-Blöcke des Blockdiagramms gelten. Im allgemeinen ist es also so, daß diverse I/O-Funktionalitäten zeitlich über ein Berechnungsintervall hinweg verteilt sind, wobei es durchaus vorkommen kann, daß einlesende und auslesende I/O-Funktionalität sowohl am Anfang, in der Mitte und/oder am Ende eines Berechnungsintervalls ausgeführt wird.

Der "reinen" Lehre von Abtastsystemen folgend, ist diese beschriebene zeitliche Verschmierung von einlesender und auslesender I/O-Funktionalität über das Berechnungsintervall hinweg jedoch unerwünscht; vielmehr ist hier beabsichtigt, die relevanten Zustandsgrößen eines Systems zu diskreten Zeitpunkten auf der Grenze zwischen zwei Berechnungsintervallen vorzunehmen. Unabhängig von dieser Betrachtungsweise kann es für bestimmte Anwendungsfälle darüber hinaus von Bedeutung sein, daß bestimmte I/O-Funktionalitäten gleichzeitig, oder zumindest in zeitlicher Nähe ausführbar sind. In der Praxis gibt es beispielsweise Anforderungen, die über I/O-Geräte einzulesenden Werte möglichst gleichzeitig einzulesen und die über I/O-Geräte auszugebenden Werte möglichst gleichzeitig auszugeben. Dies ist jedoch, wenn die Bearbeitungsreihenfolge der I/O-Blöcke in dem Gesamt-Steuerungsprogramm ausschließlich durch den Signalfluß bestimmt wird, kaum möglich.

Im übrigen ist der Anmelderin aus der Praxis bekannt, daß die Bearbeitungsreihenfolge und der Bearbeitungszeitpunkt von I/O-Funktionalität aber auch von hardwareunabhängigen Modellteilen des Blockdiagramms in gewissen Grenzen durch geeignete Verwendung und Plazierung von I/O-Blöcken in dem Blockdiagramm beeinflußt werden kann. So ist es beispielsweise möglich, eine Auswahl von Blöcken eines Blockdiagramm zu einer oder mehreren Funktionseinheiten zu gruppieren, wobei die in einer solchen Funktionseinheit zusammengefaßte Funktionalität später - nach Umwandlung des Blockdiagramms in ein Gesamt-Steuerungsprogramm - auf dem Steuerungssystem ebenfalls als Funktionseinheit, also beispielsweise als Task eines Betriebsystems ausgeführt wird. Hier ist es möglich, beispielsweise durch entsprechende Beeinflussung der Codegenerierung, innerhalb einer solchen Funktionseinheit des Gesamt-Steuerungsprogramms eine bestimmte zeitlich relevante Behandlung enthaltener Funktionen vorzusehen; so kann z. B. die gesamte, in der Funktionseinheit enthaltene I/O-Funktionalität ganz zu Beginn der Ausführung der Funktionseinheit bearbeitet bzw. ihre Bearbeitung angestoßen werden (z. B. analog/digital-Wandlung), oder auch unmittelbar vor Beendigung der Funktionseinheit.

Auch ist aus der Praxis bekannt, daß die Berechnung bestimmter Modellteile, die I/O- und/oder Funktions-Modellteile umfassen können, nicht durch den internen Signalfluß des Modells getrieben werden, sondern daß es möglich ist, diese Modellteile bzw. die Ausführung des mit ihnen korrespondierenden Codes durch andere - im Blockdiagramm darstellbare und konfigurierbare - Ereignisse auszulösen. Solche Ereignisse können in dem Erreichen eines Zeitpunktes bestehen (z. B. der Interrupt eines Timers), sie können aber auch von zeitlich nicht beeinflußbaren oder bekannten Ereignissen abhängen (z. B. eine steigende Flanke am Kanal eines I/O-Geräts). Im ersten Fall wird häufig von zeitgetriebener, im zweiten Fall von ereignis- oder eventgetriebener Ablaufsteuerung gesprochen.

Das, was bereits weiter oben ganz allgemein ausgeführt worden ist bezüglich möglicher Nachteile eines kombinierten Funktions- und I/O-Modells gilt selbstverständlich in gleicher Weise auch für jene im Modell/Blockschaltbild konfigurierbaren Eigenschaften, die die soeben beschriebene zeitliche Steuerung des Gesamt-Steuerungsprogramms, von Bestandteilen des Gesamt-Steuerungsprogramms bzw. der in ihm enthaltenen I/O-Funktionalität betreffen.

Eine besonders bevorzugte Weiterbildung des erfindungsgemäßen Verfahrens gestattet deshalb, mit Hilfe der Konfigurationsumgebung Einfluß auf die zeitliche Ablaufsteuerung des Gesamt-Steuerungsprogramms bzw. auf Teile des Gesamt-Steuerungsprogramms zu nehmen. Sie gestattet vor allem, das zeitliche Verhalten unabhängig und abweichend von den im Blockdiagramm vorgenommenen Maßnahmen zur zeitlichen Ablaufsteuerung nachträglich abzuändern und festzulegen.

Zum einen bedeutet dies, daß der Aktivierungszeitpunkt eines Programm-I/O-Zugriffspunktes bzw. des korrespondierenden Elementes des I/O-Steuerungsprogramms unabhängig und abweichend von der signalflußgetriebenen Bearbeitungsreihenfolge in der Konfigurationsumgebung vorgebbar ist. Zum anderen bedeutet es, daß auch die im Blockschaltbild vorgenommenen Maßnahmen zur zeit- und ereignisgetriebenen Ablaufsteuerung des Gesamt-Steuerungsprogramms, von Bestandteilen des Gesamt-Steuerungsprogramms bzw. der in ihm enthaltenen I/O-Funktionalität in der Konfigurationsumgebung erstmalig oder in Abweichung von der Konfiguration im Blockschaltbild vorgenommen werden kann.

Die Konfigurationsumgebung muß folglich nicht die einzige Beeinflussungsmöglichkeit zur Festlegung des Zeitverhaltens der I/O-Funktionalität darstellen. Vielmehr kann das Zeitverhalten auch teilweise, oder vollständig zunächst anhand des Modells/Blockschaltbildes vorgenommen worden sein, dies steht nicht im Widerspruch zu dem erfindungsgemäßen Verfahren bzw. zu der erfindungsgemäßen Konfigurationsumgebung. Von Bedeutung ist, daß die Konfigurationsumgebung jedenfalls eine weitere Schnittstelle für den Benutzer darstellt, um das Zeitverhalten des Gesamt-Steuerungsprogramms, von Bestandteilen des Gesamt-Steuerungsprogramms bzw. der in ihm enthaltenen I/O-Funktionalität unabhängig von Blockschaltbild und/oder der Modellierungsumgebung vorzunehmen.

Aufgrund dieser Eigenschaft ist es dem Benutzer beispielsweise über die bevorzugt ausgestaltete Konfigurationsumgebung möglich, alle oder eine Auswahl über diverse I/O-Geräte einzulesende Daten zeitgleich oder jedenfalls in unmittelbarer Abfolge innerhalb eines Zeitintervalls abzurufen bzw. die entsprechende I/O-Funktionalität zu aktivieren, es ist ihm möglich die durch den Signalfluß festgelegte Bearbeitungsreihenfolge durch die Konfigurationsumgebung anzuzeigen und abzuändern und es ist ihm möglich zeitlich relevante Eigenschaften von I/O-Geräten, wie beispielsweise die Frequenz der Auslösung eines Timer-Interrupts, der die Ausführung des Gesamt-Steuerungsprogramms, von Teilen des Gesamt-Steuerungsprogramms bzw. der in ihm/ihnen enthaltenen I/O-Funktionalität steuert, nach seinem Belieben festzulegen.

Dabei ist es zum einen möglich, lediglich die relative Abfolge der Bearbeitung bestimmter I/O-Funktionalitäten zueinander zu verändern, indem beispielsweise in dem Funktions-Steuerungsprogramm die Programm-I/O-Zugriffspunkte gemäß der benutzerseitigen Vorgaben umsortiert werden, zum anderen ist es möglich, über die Konfigurationsumgebung die absoluten Zeitpunkte der Ausführung einer bestimmten I/O-Funktionalität bzw. eines bestimmten Elements des I/O-Steuerungsprogramms jeweils in Bezug auf ein Berechnungsintervall oder in Bezug auf die Gesamtlaufzeit des Gesamt-Steuerungsprogramms oder bezüglich eines beliebigen anderen Zeitpunktes anzugeben. Im letzteren Fall kann es notwendig sein, Betriebssysteme mit bestimmten Fähigkeiten bezüglich des Prozeß- und Thread-Handlings einzusetzen, um beispielsweise die Implementierung zeitgetriebener Ereignisse zu ermöglichen (Timer Tasks, Time Tables etc.).

Die bevorzugte Konfigurationsumgebung setzt ganz allgemein die genannten benutzerseitigen Eingaben (Vorgabe der Geräteausstattung, Parametrierung des Steuerungssystems, Definition von I/O-Ports und Modell-I/O-Zugriffspunkten, Zuweisen von I/O-Ports zu Modell-I/O-Zugriffspunkten) mit Hilfe der möglichen softwaretechnischen Mittel um, insbesondere über die direkte Eingabe über einen Dialog bzw. ein Dialogfenster und/oder über Programmierschnittstellen der Konfigurationsumgebung.

Genauso verfügt die Konfigurationsumgebung in einer weiteren bevorzugten Ausgestaltung über eine ausgedehnte Diagnosefunktionalität um widersprüchliche oder auch nur unvorteilhafte Benutzereingaben beispielsweise bei der Parametrierung der Steuerungsumgebung bzw. der I/O-Geräteeigenschaften, der Festlegung von Signalpfaden und der Zuweisung von I/O-Ports zu Modell-I/O-Zugriffspunkten anzuzeigen und Hilfestellungen für Lösungsalternativen anzubieten.

Durch die erfindungsgemäße Aufteilung des Gesamt-Steuerungsprogramms in zwei Module, nämlich das Funktions-Steuerungsprogramm und das 1/0-Steuerungsprogramm, die in zwei weitestgehend entkoppelten Prozessen erzeugt werden, können überraschenderweise eine Vielzahl von Nachteilen des bisher bekannten Verfahrens, von dem die Erfindung ausgeht, gelöst werden, nämlich es können Steuerungssystem- und I/O-Geräteeigenschaften an einer zentralen Stelle parametriert werden, es ist ferner möglich, hardwarespezifische Einstellungen unabhängig von der Modellierungsumgebung und/oder dem Blockdiagramm vorzunehmen und zusätzlich wird durch diese Aufteilung vermieden, das eine algorithmische Veränderung im Blockdiagramm (Funktions-Modell) automatisch eine Neuübersetzung auch hardwarerelevanter Teile erfordert, wie umgekehrt eine Veränderung der Parametrierung von Steuerungssystem- und/oder I/O-Geräteeigenschaften nicht mehr auch die Neuübersetzung hardwareunabhängiger Modellteile erfordert (Funktions-Modell und -Steuerungsprogramm), sondern nur die neue Erstellung des I/O-Steuerungsprogramms.

Die Anwendung des oben beschriebenen, erfindungsgemäßen Verfahrens ist nicht auf bestimmte Hardware-Architekturen festgelegt, insbesondere ist es aber dadurch gekennzeichnet, daß auf dem Steuerungssystem das Gesamt-Steuerungsprogramm, insbesondere auch die Konfigurationsumgebung und insbesondere auch die grafische Modellierungsumgebung betrieben wird, wobei das durch das Verfahren erzeugte Gesamt-Steuerungsprogramm vorzugsweise unter einem echtzeitfähigen Betriebssystem oder einem echtzeitfähigen Teil eines Betriebssystems des Steuerungssystems betreibbar ist, insbesondere wobei das Steuerungssystem nur eine elektronische Rechnereinheit aufweist, die die genannten Programme beziehungsweise Anwendungen ausführt.

Vorteile des erfindungsgemäßen Verfahrens bleiben aber auch dann ohne Einschränkungen bestehen, wenn das Steuerungssystem ein Hostsystem, ein Zielsystem und ein zugeordnetes I/O-Gerät aufweist, wobei Host- und Zielsystem jeweils mindestens eine elektronische Rechnereinheit umfassen mit zumindest einer dem Hostsystem zugeordneten Dateneingabe- und Datenanzeige-Einheit und wobei Host- und Zielsystem und/oder Zielsystem und I/O-Gerät jeweils über eine oder mehrere Kommunikationsschnittstellen in Verbindung stehen. Besonders vorteilhaft ist der Einsatz des Verfahrens auch dann, wenn zusätzlich Hostsystem und I/O-Gerät direkt über mindestens eine Kommunikationsschnittstelle verbunden sind, insbesondere dann, wenn das I/O-Gerät eine selbstständigere Einheit darstellt und beispielsweise auch über eine Rechnereinheit verfügt. Bei einer solchen Konfiguration ist erfindungsgemäß insbesondere vorgesehen, die Modellierungsumgebung und die Konfigurationsumgebung vorzugsweise auf dem Hostsystem auszuführen und das mit dem Verfahren erstellte Gesamt-Steuerungsprogramm vorzugsweise auf dem Zielsystem zu betreiben. Bei der zuvor geschilderten Anordnung ist das Hostsystem insbesondere mit einem Standard-Betriebssystem ausgestattet, das es erlaubt, die grafische Modellierungsumgebungen und/oder die Konfigurationsumgebung zu betreiben und das Betriebssystem oder die Betriebssysteme des Zielsystems ist bzw. sind echtzeitfähig um die zugeordneten I/O-Geräte und die mit ihnen verbundenen technischen Prozesse synchron zur physikalischen Zeit zu beeinflussen. Dieser Aufbau gestattet insbesondere auch die Trennung von Host- und Zielsystem nach erfolgter Übertragung des Gesamt-Steuerungsprogramms auf den Zielrechner, womit derartig gestaltete Steuerungssysteme erheblich an Flexibilität gewinnen.

Genauso wie die Anwendung des erfindungsgemäßen Verfahrens - wie oben beschrieben - unabhängig von der zur Anwendung kommenden Hardware-Architektur ist, so ist der Einsatz des Verfahrens auch unabhängig davon, welche speziellen Technologien zur Umsetzung einer bestimmten Hardware-Architektur verwendet werden. Damit ist gemeint, daß das mit dem Verfahren erzeugte Gesamt-Steuerungsprogramm beispielsweise sowohl auf einer Rechnereinheit betrieben werden kann, die auf dem Einsatz von Prozessoren und/oder Mikrocontrollern basiert und daß es alternativ und/oder ergänzend z. B. auch möglich ist, das Gesamt-Steuerungsprogramm mit einer HardwareTechnologie zu realisieren, die auf wiederbeschreibbaren Speicherelementen beruht und durch Programmierung von Logikbausteinen wie z. B. PROMs, PLAs, PALs und FPGAs implementiert wird.

Die Erfindung löst die gestellte Aufgabe darüber hinaus auch durch Unterstützung des oben beschriebenen Verfahrens mit Hilfe einer Konfigurationseinrichtung zur Erzeugung eines I/O-Steuerungsprogramms für ein Steuerungssystem mit mindestens einem zugeordneten I/O-Gerät. Die Konfigurationseinrichtung umfaßt eine Schnittstelle zur Erfassung eines Blockdiagramms mit Modell-I/O-Zugriffspunkten. Das Blockdiagramm selbst dient lediglich zur separaten, von dem Steuerungssystem und dem I/O-Gerät unabhängigen Erzeugung eines Funktions-Steuerungsprogramms mit Programm-I/O-Zugriffspunkten, die mit den Modell-I/O-Zugriffspunkten des Blockdiagramms korrespondieren.

Die Konfigurationseinrichtung umfaßt darüber hinaus weitere Schnittstellen, über die das Steuerungssystem und/oder das zugeordnete I/O-Gerät und deren bzw. dessen Eigenschaften automatisch erkennbar sind, sofern diese Hardware-Komponenten durch eine Kommunikationsverbindung mit der Rechnereinheit verbunden sind, auf der die Konfigurationseinrichtung betrieben wird. Alternativ oder ergänzend ist das Steuerungssystem und/oder das ihm zugeordnete I/O-Gerät und deren bzw. dessen Eigenschaften der Konfigurationseinrichtung auch zuordenbar, beispielsweise durch benutzerseitige Eingaben oder durch einlesen einer geeigneten I/O-Konfigurationsdatei.

Parametrierbare Eigenschaften des Steuerungssystems und/oder des I/O-Geräts sind darüber hinaus über die Konfigurationseinrichtung, vorzugsweise durch Benutzereingaben festlegbar. Dies betrifft Angaben zu einfachen Komponenten wie z. B. digitale I/O-Kanäle wie auch Angaben zu deutlich aufwendigeren I/O-Geräten, die beispielsweise selbst prozessorgesteuert sind (z. B. Signalgenerierung und -analyse, Signalkonvertierung und - konditionierung, integrierte Module zur Erzeugung von Zündsignalen für Otto-Motoren etc.). Auch ist unter Parametrierung, wie in der Beschreibung des erfindungsgemäßen Verfahrens auch ausgeführt wurde, die Festlegung von Signalpfaden zwischen verschiedenen Steuerungssystemen bzw. deren Rechnereinheiten und den zugeordneten I/O-Geräten zu verstehen, insbesondere auch bei Geräte-Konfigurationen, bei denen Signalkonditionierungs- und Leistungseinheiten zum Einsatz kommen, wie typischerweise im Bereich der Anwendungsfälle RCP und HIL.

Die in der beschriebenen Art und Weise in der Konfigurationseinrichtung hinterlegten Informationen (parametrierbare Eigenschaften des Steuerungssystems und/oder des I/O-Geräts und Signale des Blockdiagramms, die insbesondere als Modell-I/O-Zugriffspunkte gekennzeichnet sind) sind mittels der Konfigurationseinrichtung ferner anzeigbar und die Angaben über das Steuerungssystem und/oder zugeordnete I/O-Geräte und deren Eigenschaften sind durch die Konfigurationseinrichtung den Modell-I/O-Zugriffspunkten zuordenbar, so daß eine Verknüpfung zwischen den inhaltlich nicht weiter spezifizierten Modell-I/O-Zugriffspunkten des Blockdiagramms und der konkreten, mit und in der Konfigurationseinrichtung spezifizierten I/O-Funktionalität hergestellt werden kann.

Auf dieser Basis ist durch die erfindungsgemäße Konfigurationseinrichtung ein I/O-Steuerungsprogramm für den Zugriff auf das Steuerungssystem und das ihm zugeordnete I/O-Gerät automatisch erzeugbar, wobei das I/O-Steuerungsprogramm bzw. Komponenten von ihm mittels der Programm-I/O-Zugriffspunkte des Funktions-Steuerungsprogramms bei Ablauf auf dem Steuerungssystem zugreifbar ist bzw. sind.

Im einzelnen gibt es nun eine Vielzahl von Möglichkeiten, das erfindungsgemäße Verfahren bzw. die erfindungsgemäße Konfigurationseinrichtung zur Konfiguration eines Steuerungssystems auszugestalten und weiterzubilden. Dazu wird verwiesen sowohl auf die dem Patentanspruch 1 nachgeordneten Patentansprüche als auch auf die Beschreibung eines in der Zeichnung dargestellten Ausführungsbeispiels des erfindungsgemäßen Verfahrens bzw. der erfindungsgemäßen Konfigurationseinrichtung zur Konfiguration eines Steuerungssystems. In der Zeichnung zeigen
- Fig. 1: eine schematische Darstellung zur Erläuterung des Wirkzusammenhangs der an dem erfindungsgemäßen Verfahren beteiligten Komponenten,
- Fig. 2: eine graphische Darstellung zur Erläuterung eines bevorzugten Ausführungsbeispiels eines mit dem erfindungsgemäßen Verfahren und der erfindungsgemäßen Konfigurationseinrichtung behandelbaren Steuerungssystems,
- Fig. 3: eine graphische Darstellung zur Erläuterung der erfindungsgemäßen Kennzeichnung von Signalen durch Signalportblöcke,
- Fig. 4: eine teilweise ins Detail gehende Darstellung einer Oberfläche der erfindungsgemäßen Konfigurationsumgebung bzw. der erfindungsgemäßen Konfigurationseinrichtung,
- Fig. 5: eine detaillierte Darstellung zur Erläuterung eines Ausführungsbeispiels einer erfindungsgemäßen Oberfläche zur Parametrierung von I/O-Geräten.

Erfindungsgemäße Verfahren dienen der Erzeugung eines ausführbaren Gesamt-Steuerungsprogramms zur Steuerung eines Steuerungssystems, wie sie in der Praxis eingesetzt werden, wozu erneut auf die genannten Produktdokumentationen der dSPACE GmbH und der The MathWorks Corp. verwiesen werden darf.

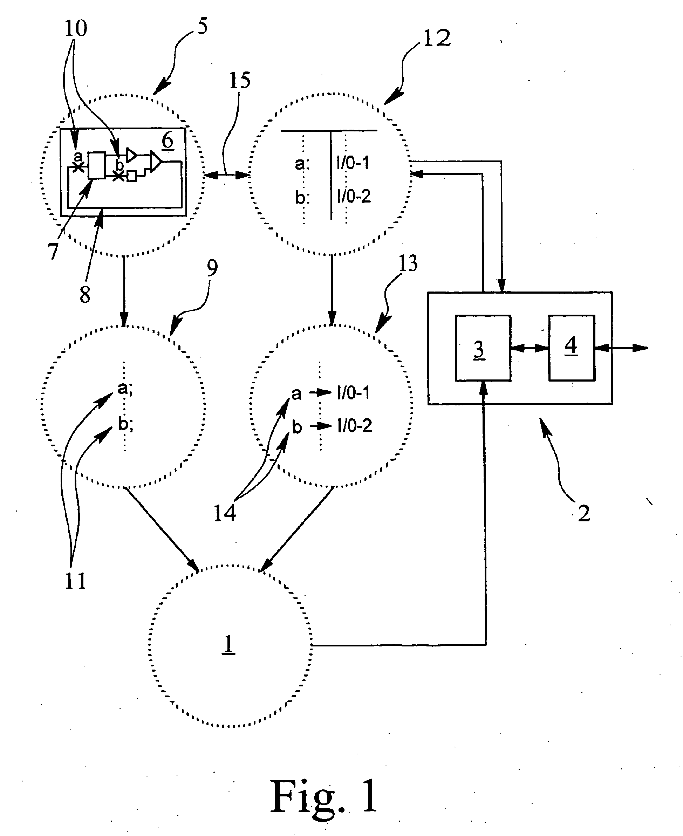

Fig. 1 zeigt die an dem Verfahren beteiligten, in Wirkzusammenhang stehenden Komponenten des erfindungsgemäßen Verfahrens. Ziel des Verfahrens ist es, ein Gesamt-Steuerungsprogramm 1 zur Steuerung eines Steuerungssystems 2 mit mindestens einer elektronischen Rechnereinheit 3 sowie mindestens einem zugeordneten I/O-Gerät 4 zu erzeugen, insbesondere wobei das I/O-Gerät 4 mit einem zu beeinflussenden, technisch-physikalischen Prozeß verbunden ist, der in Fig. 1 nicht weiter dargestellt ist. Zunächst wird mit Hilfe eines durch eine graphische Modellierungsumgebung 5 erstellten Blockdiagramms 6, dessen Blöcke 7 durch Signallinien 8 zur Übertragung von Signalen verbunden werden, ein Funktions-Steuerungsprogramm 9 erzeugt.

Das Gesamt-Steuerungsprogramm 1 ist insbesondere ein Meß-, Steuer-, Regel- und/oder Kalibrierungsprogramm, das im allgemeinen Sinne für Prozeßsteuerungsaufgaben verwendet wird.

Erfindungsgemäß wird mindestens eine Signallinie 8 bzw. ein Signal des Blockdiagramms 6 als symbolischer Modell-I/O-Zugriffspunkt 10 gekennzeichnet. Durch diese Kennzeichnung wird ausgedrückt, daß das betreffende Signal bei einer späteren Verwendung des Gesamt-Steuerungsprogramms 1 auf einem Steuerungsgerät 2 durch Zugriff auf das I/O-Gerät 4 eingelesen oder ausgegeben werden soll.

Verfahrensgemäß ist weiterhin vorgesehen, daß ein Übersetzungsprogramm das Blockdiagramm 6 in ein auf dem Steuerungssystem 2 ausführbares Funktions-Steuerungsprogramm 9 übersetzt. Die Übersetzung ist dabei insbesondere vollkommen unabhängig von dem Steuerungssystem 2 und/oder dem I/O-Gerät 4 und deren Eigenschaften. Durch die Modell-I/O-Zugriffspunkte 10 werden bei der Übersetzung in dem Funktions-Steuerungsprogramm 9 korrespondierende Programm-I/O-Zugriffspunkte 11 erzeugt, die selbst keinerlei Hinweis auf die Art der angesprochenen I/O-Geräte 4 oder auf eine umzusetzende I/O-Funktionalität enthalten.

Erfindungsgemäß wird mit einer zusätzlichen Konfigurationsumgebung 12 ein I/O-Steuerungsprogramm 13 erzeugt, das zusammen mit dem Funktions-Steuerungsprogramm 9, das auf dem Steuerungssystem 2 lauffähige Gesamt-Steuerungsprogramm 1 bildet. Dabei kann das Funktions-Steuerungsprogramm 9 über seine Programm-I/O-Zugriffspunkte 11 auf Elemente des I/O-Steuerungsprogramms 13 zugreifen. Die Elemente des I/O-Steuerungsprogramms 13 sind dabei so ausgestaltet, daß sie das Steuerungssystem 2 und das zugeordnete I/O-Gerät 4 bzw. deren Eigenschaften durch geeignete I/O-Zugriffe ansprechen können.

Die softwaretechnische Implementierung der Elemente des I/O-Steuerungsprogramms 13 ist an keine besonderen Verfahren oder Technologien gebunden. Üblicherweise werden die einem bestimmten I/O-Gerät 4 zugeordneten Funktions-Bibliotheken in das I/O-Steuerungsprogramm 13 eingebunden und lediglich durch Funktionsaufrufe referenziert, oder aber die benötigten I/O-Funktionen werden - angepaßt an und reduziert auf die speziellen Erfordernisse des I/O-Steuerungsprogramms 13 - generiert und in den Elementen des I/O-Steuerungsprogramms 13 verwendet.

Die Konfigurationsumgebung 12 ist vorzugsweise mit einer Modell-Schnittstelle 15 zum Austausch von Daten mit dem Blockdiagramm 6 bzw. der graphischen Modellierungsumgebung 5 ausgestattet. Durch die Modell-Schnittstelle 15 ist es der Konfigurationsumgebung 12 grundsätzlich möglich, das mit der Modellierungsumgebung 5 erstellte Blockdiagramm 6 einzulesen und die darin enthaltenen Modell-I/O-Zugriffspunkte 10 zu erkennen und anzuzeigen. Die Modell-Schnittstelle 15 ist nach einem bevorzugten Ausführungsbeispiel - wie in Fig. 1 dargestellt - so beschaffen, daß nicht nur Informationen aus dem Blockdiagramm 6 bzw. von der Modellierungsumgebung 5 aufgenommen werden können, sondern derart, daß auch in der Konfigurationsumgebung 12 vorgenommene Eingaben, insbesondere Eingaben zur Kennzeichnung von Signalen als Modell-I/O-Zugriffspunkte 10, wieder in das Blockdiagramm 6 übertragen werden können. Die Modell-Schnittstelle 15 kann verschiedenartig ausgeformt sein, in einem bevorzugten Ausfiihrungsbeispiel, das graphisch nicht näher dargestellt ist, ist die Schnittstelle insbesondere dateibasiert und/oder als eine Programmierschnittstelle realisiert, bzw. sie nutzt eine vorhandene Programmierschnittstelle der Modellierungsumgebung 5. Die eingelesenen Daten müssen darüber hinaus nicht originär aus der Modellierungsumgebung 5 stammen, sondern es können auch beliebige andere Datenformate sein, in die das Blockdiagramm 6 unter Wahrung aller notwendigen Information übertragen wurde, solange die Modell-Schnittstelle 15 für das jeweilige Datenformat ausgelegt ist.

Aus diesem Zusammenhang ist ersichtlich, daß die erfindungsgemäße Konfigurationsumgebung 12 in dem geschilderten Ausführungsbeispiel insbesondere als separate Anwendung unabhängig von der Modellierungsumgebung 5 ausgeführt werden kann und daher die besonders vorteilhafte Eigenschaft hat, mit verschiedenen Modellierungsumgebungen 5 arbeiten zu können, bzw. einfach an diese anpaßbar zu sein. Eine vollständige Entkopplung ist insbesondere dann gewährleistet, wenn die Kennzeichnung von Signalen bzw. Signallinien 8 des Blockdiagramms 6 als Modell-I/O-Zugriffspunkt 10 nicht nur mit Mitteln der Modellierungsumgebung 5 erfolgt, sondern über ein separates, in Fig. 1 nicht dargestelltes Programm, das das Blockdiagramm 6 zwecks Darstellung einliest, die Signale als Modell-I/O-Zugriffspunkte 10 kennzeichenbar darstellt und letztendlich das mit Modell-I/O-Zugriffspunkten 10 versehene Blockdiagramm 6 in einer für die Konfigurationsumgebung 12 lesbaren Form ablegt.

In Fig. 1 ist weiterhin dargestellt, daß die Konfigurationsumgebung 12 des erfindungsgemäßen Verfahrens über eine oder mehrere Verbindungen zum Steuerungssystem 2 und dem zugeordneten I/O-Gerät 4 verfügt, die dazu genutzt werden, das Steuerungssystem 2 und die dem Steuerungssystem 2 zugeordneten I/O-Geräte 4 und/oder ihre Eigenschaften automatisch zu erkennen. Insbesondere kann die Konfigurationsumgebung 12 über eine solche Verbindung auch aktiv auf das Steuerungssystem 2 einwirken, beispielsweise um Einstellungen, Parametrierungen und Systemzustände zu beeinflussen.

Für den Fall, daß eine Verbindung zwischen Konfigurationsumgebung 12 und Steuerungssystem 2 nicht existiert, bietet eine besonders bevorzugte Ausfiihrungsform der Konfigurationsumgebung 12 eine weitere, in Fig. 1 nicht explizit dargestellte Schnittstelle, über die durch den Benutzer I/O-Geräte 4 und deren Eigenschaften vorgegeben und letztendlich angezeigt werden können. Die beschriebene Benutzerschnittstelle zur Angabe von I/O-Geräten und deren Eigenschaften kann durch beliebige verfügbare technische Mittel umgesetzt werden. In einer bevorzugten Ausführungsform erfolgen die Benutzereingaben erfindungsgemäß über einen Benutzerdialog und/oder über eine Programmierschnittstelle der Konfigurationsumgebung 12.

Über die Konfigurationsumgebung 12 lassen sich zusätzlich durch Benutzereingabe oder durch eine Programmierschnittstelle der Konfigurationsumgebung 12 die parametrierbaren Eigenschaften der I/O-Geräte 4 konfigurieren und die Signalpfade innerhalb eines I/O-Geräts 4 und/oder zwischen verschiedenen I/O-Geräten 4 festlegen (siehe I/O-1 und I/O-2 auf der rechten Seite der angedeuteten Tabelle der Konfigurationsumgebung 12 in Fig. 1). Diese Angaben sind eine vollständige und eindeutige Parametrierung der Steuerungssystem- und I/O-Geräteeigenschaften. Der Benutzer kann somit die Eigenschaften der I/O-Geräte unabhängig von der graphischen Modellierungsumgebung 5 festlegen.

In der Konfigurationsumgebung 12 des hier dargestellten Ausfiihrungsbeispiels ist es aufgrund der strikten Trennung zwischen Programm-I/O-Zugriffspunkten 11 in dem Funktions-Steuerungsprogramm 9 einerseits und damit korrespondierenden Elementen 14 des I/O-Steuerungsprogramms 13 andererseits möglich, die Ausführung der Elemente 14 des I/O-Steuerungsprogramms 13 voneinander abhängig zu machen bzw. durch eine in der Konfigurationsumgebung 12 vornehmbare Referenzierung eines Elements 14 des I/O-Steuerungsprogramms 13 durch ein anderes Element 14 des I/O-Steuerungsprogramms 13 eine verkettete Ausführung von Elementen 14 des I/O-Steuerungsprogramms 13 zu bewirken.

Bis zu dem hier beschriebenen erfindungsgemäßen Verfahrenschritt sind in der Konfigurationsumgebung 12 Angaben gesammelt worden, zum einen über die abstrakt im Modell geplanten und symbolisch gekennzeichneten Modell-I/O-Zugriffspunkte 10 des Blockdiagramms 6 und zum anderen Angaben über ein genau spezifiziertes und parametriertes Steuerungssystems 2 mit zugeordnetem I/O-Gerät 4, was in Fig. 1 durch die skizzierte Tabelle angedeutet ist. In dem erfindungsgemäßen Verfahren ist weiterhin vorgesehen, die I/O-Geräteeigenschaften, die zur Laufzeit des Gesamt-Steuerungsprogramms 1 aktiv genutzt werden sollen, d. h. veränderlich oder veränderbar sind, über die Konfigurationsumgebung 12 durch Benutzereingabe und/oder durch eine Programmierschnittstelle festzulegen. Unter I/O-Geräteeigenschaften werden dabei sowohl die verfügbaren Kanäle eines I/O-Geräts 4 angesehen wie auch parametrierbare Eigenschaften. Die als zur Laufzeit veränderlichen I/O-Geräteeigenschaften werden gesondert als I/O-Ports bezeichnet. Durch die in Fig. 1 dargestellte verfahrensgemäße Gegenüberstellung von I/O-Ports der I/O-Geräte 4 und der Modell-I/O-Zugriffspunkte 10 des Blockdiagramms 6 in der Konfigurationsumgebung 12 kann eine eindeutige Zuordnung von I/O-Ports der I/O-Geräte 4 auf die Modell-I/O-Zugriffspunkte 10 des Blockdiagramms 6 vorgenommen und damit festgelegt werden, welche Modell-I/O-Zugriffspunkte 10 welche I/O-Funktionalität eines bestimmten I/O-Geräts 4 ansprechen soll. Durch diesen Verfahrensschritt wird eine Verbindung zwischen den durch das Verfahren auf besonders vorteilhafte Art getrennten Bereichen der graphischen Modellierungsumgebung 5 einerseits und dem Bereich des Steuerungssystems 2 und dem zugeordneten I/O-Gerät 4 andererseits hergestellt. Durch den oben beschriebenen Zuordnungsvorgang ist es mit Hilfe der Konfigurationsumgebung 12 möglich, die Elemente 14 des I/O-Steuerprogramms 13 automatisch so zu erzeugen, daß sie die Zuordnung exakt aufgreifen und die Programm-I/O-Zugriffspunkte 11 des Funktions-Steuerungsprogramms 9 bei Nutzung des I/O-Steuerungsprogramms 13 automatisch die richtigen I/O-Geräteeigenschaften (Kanäle, Parameter) ansprechen.

Neben der Konfiguration der oben beschriebenen I/O-Geräteeigenschaften vermittelt die Konfigurationsumgebung 12 dem Verwender ein umfassendes, vorliegend jedoch nicht figürlich dargestelltes Bild über die zeitliche Steuerung und die zeitlichen Abhängigkeiten innerhalb des Gesamt-Steuerungsprogramms 1, von Teilen des Gesamt-Steuerungsprogramms 1 bzw. der in ihm/ihnen enthaltenen I/O-Funktionalität. Die Konfigurationsumgebung 12 gestattet dem Verwender zusätzlich, auf die zeitliche Ablaufsteuerung Einfluß zu nehmen.

Die in dem Ausführungsbeispiel verwendete Konfigurationsumgebung 12 erlaubt eine Einflußnahme sowohl auf signalflußgetriebene wie auch zeit- und ereignisgetriebene Bearbeitungsreihenfolgen bzw. Ausfiihrungszeiten innerhalb des Gesamt-Steuerungsprogramms 1. Zur Erläuterung der Begriffe wird auf die bereits weiter oben angegebenen ausführlichen Darstellungen verwiesen.

Die signalflußgetriebenen Bearbeitungsreihenfolgen sind untrennbar mit dem Blockdiagramm des Modells verbunden und resultieren aus seiner vernetzten Struktur. Der Anwender der Konfigurationsumgebung 12 wird sich hier zumeist also einer bereits bestehenden, sich aus einer automatisierten Analyse des Blockdiagramms ergebenden Bearbeitungsreihenfolge von Abläufen gegenübersehen und paßt diese ggf. mittels der Konfigurationsumgebung 12 an. Konkret kann durch einfaches Umsortieren von Funktionseinheiten in der - hier nicht dargestellten - in Listenform aufbereiteten Bearbeitungsreihenfolge eine Veränderung der relativen Ausführung dieser Funktionseinheiten zueinander herbeigeführt werden.

Genauso sind absolute Ausführungszeitpunkte innerhalb des Gesamt-Steuerungsprogramms 1, von Teilen des Gesamt-Steuerungsprogramms 1 bzw. der in ihm/ihnen enthaltenen I/O-Funktionalität über die Konfigurationsumgebung 12 einstellbar, beispielsweise durch Festlegen der Parameter eines Timer-Interrupts oder durch die in den Figuren nicht dargestellte Zuordnung eines Interrupt-Eingangs des Steuerungssystems zu einer Funktionseinheit des Modells bzw. des Funktions-Modells.

Die Konfigurationsumgebung 12 ist ganz allgemein zur Durchfiihrung des erfindungsgemäßen Verfahrens auf I/O-Geräteeigenschaften und die Ausfiihrungszeit betreffende Informationen aus der graphischen Modellierungsumgebung 5 nicht angewiesen. Dennoch kann die Konfigurationsumgebung 12, wenn die graphische Modellierungsumgebung 5 die Möglichkeit der Hinterlegung solcher Informationen gestattet, diese Informationen erkennen und darstellen. Wesentlich ist, daß durch die in diesem Ausführungsbeispiel zum Einsatz kommende Konfigurationsumgebung 12 eine zusätzliche, von der graphischen Modellierungsumgebung 5 und dem Blockdiagramm 6 unabhängige Möglichkeit vorhanden ist, die die I/O-Geräte und das Zeitverhalten betreffenden Parameter beeinflussen und einstellen zu können.

In Fig. 1 wird das Steuerungssystem 2, eine Rechnereinheit 3 und ein zugeordnetes I/O-Gerät 4 umfassend dargestellt. Auch wenn es sich grundsätzlich um eine beliebige Anzahl von Rechnereinheiten 3 und ihnen zugeordneten I/O-Geräten 4 handeln kann, besteht eine bevorzugte Ausführungsform darin, daß das Steuerungssystem 2 genau eine Rechnereinheit 3 mit beliebig vielen zugeordneten I/O-Geräten 4 umfaßt. In diesem Fall wird das Gesamt-Steuerungsprogramm 1 vorzugsweise auf der Rechnereinheit 3 des Steuerungssystems 2 betrieben. Besonders vorteilhaft ist der zusätzliche Betrieb der Konfigurationsumgebung 12 und insbesondere auch der graphischen Modellierungsumgebung 5 auf der Rechnereinheit 3 des Steuerungssystems 2. Durch die beschriebene Zusammenstellung von Anwendungen auf der Rechnereinheit 3 des Steuerungssystems 2 werden durch das erfindungsgemäße Verfahren insbesondere wichtige Arbeitszenarien, wie RCP und HIL, automatisch und besonders effektiv unterstützt. Dabei sollte gewährleistet sein, daß das Gesamt-Steuerungsprogramm 1 zur Sicherstellung der Echtzeitfähigkeit unter einem echtzeitfähigen Betriebssystem oder auch nur dem echtzeitfähigen Teil eines Betriebssystems der Rechnereinheit 3 betrieben wird.

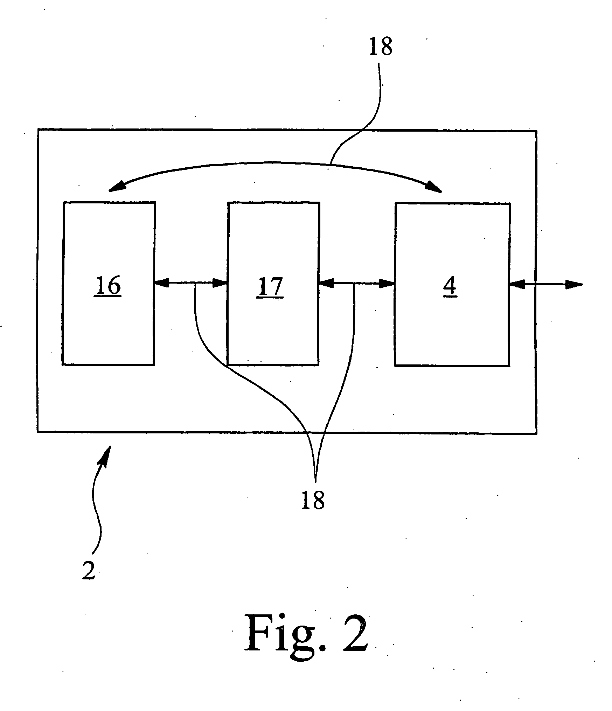

Fig. 2 zeigt ein anderes bevorzugtes Ausführungsbeispiel für den gerätetechnischen Aufbau des Steuerungssystems 2. Hier weist das Steuerungssystem 2 eine als Hostsystem 16 bezeichnete Rechnereinheit 3 sowie mindestens eine als Zielsystem 17 bezeichnete zusätzliche Rechnereinheit 3 auf, wobei die Geräte über Kommunikationsverbindungen 18 miteinander in Verbindung stehen. Bei einem Steuerungssystem 2 mit der oben beschriebenen Gerätetopologie wird die Konfigurationsumgebung 12 und insbesondere auch die Modellierungsumgebung 5 vorzugsweise auf dem Hostsystem 16 ausgeführt und das Gesamt-Steuerungsprogramm 1 vorzugsweise auf dem Zielrechner 17. Diese verfahrensgemäße Anwendungen hat den Vorteil, daß zeitlich unkritische Anordnungen wie die Konfigurationsumgebung 12 und die graphische Modellierungsumgebung 5 unter einem Standardbetriebssystem betrieben werden können - für die solche Anwendungen auch in der Regel nur zur Verfügung stehen - und für das echtzeitkritische Gesamt-Steuerungsprogramm 1 ein besonders geeignetes und aufgrund der gerätetechnischen Trennung von dem Hostsystem 16 auch ein unabhängiges Echtzeitbetriebssystem ausgewählt und verwendet werden kann. Typischerweise ist mindestens eine Rechnereinheit 3 der Steuerungssysteme 2, wie sie in den Fig. 1 und 2 dargestellt sind, mit einer Dateneingabe- und Datenanzeigeeinheit verbunden, wobei diese vorzugsweise mit der Rechnereinheit verbunden ist, über die Benutzerschnittstellen bedient werden können, was auch Schnittstellen zur Ausgabe und Visualisierung angeforderter Prozeßdaten sein können. Die in Fig. 2 dargestellte Kommunikationsverbindung 18 zwischen Hostsystem 16 und I/O-Gerät 4 wird insbesondere dann genutzt, wenn das I/O-Gerät 4 über einen eigenen Prozessor verfügt, der neben anderen Aufgaben auch den Datenaustausch mit dem Hostsystem 16 bewältigen kann.

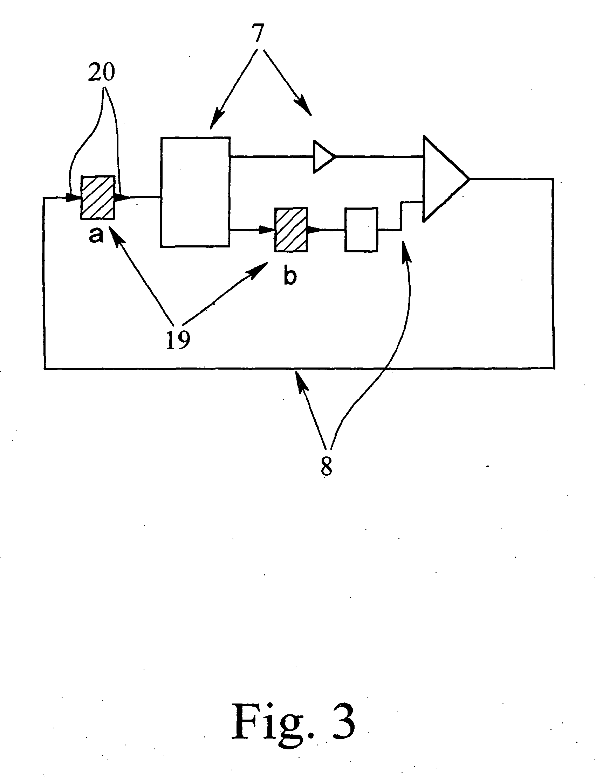

Fig. 3 zeigt eine blockbasierte Variante zur Kennzeichnung eines Signals oder einer Signallinie 8 eines Blockdiagramms 6 als Modell-I/O-Zugriffspunkt 10, durch Verwendung von Signalportblöcken 19, die mindestens über je einen eingangsseitigen und einen ausgangsseitigen Signalport 20 verfügen und in Signallinien 8 eingefügt werden. Dieses bevorzugte Ausführungsbeispiel bietet sich z. B. dann an, wenn die graphische Modellierungsumgebung 5 den Einsatz benutzerseitig definierter Blöcke, wie in diesem Ausführungsbeispiel die Signalportblöcke 19, erlaubt. Zur Kennzeichnung der Signale müssen die Signalportblöcke 19 und/oder die Signalports 20 eindeutig gekennzeichnet werden, beispielsweise durch geeignete Namensvergabe. Abweichend von der Darstellung in Fig. 3 können die eingesetzten Signalportblöcke 19 auch über mehrere eingangs- und ausgangsseitige Signalports 20 verfügen, wobei die Anzahl der verwendeten Signalports 20 vorzugsweise durch den Benutzer vorgegeben wird und automatisch jeweils ein eingangsseitiger mit einem ausgangsseitigen Signalport 20 korrespondiert. Der Signalfluß darf bzw. soll vorzugsweise durch den Einsatz der Signalportblöcke 19 nicht beeinflußt werden, d. h. eingangsseitige Signale sollten vorzugsweise unverändert und unverzögert durch einen Signalportblock 19 zum Blockausgang übertragen werden (direkter Datendurchgriff). Verfahrensgemäß werden in der Konfigurationsumgebung 12, basierend auf dem Ausführungsbeispiel in Fig. 3, die als Modell-I/O-Zugriffspunkte 10 gekennzeichneten Signale, bzw. gleichbedeutend die entsprechenden Signalports, automatisch dargestellt.

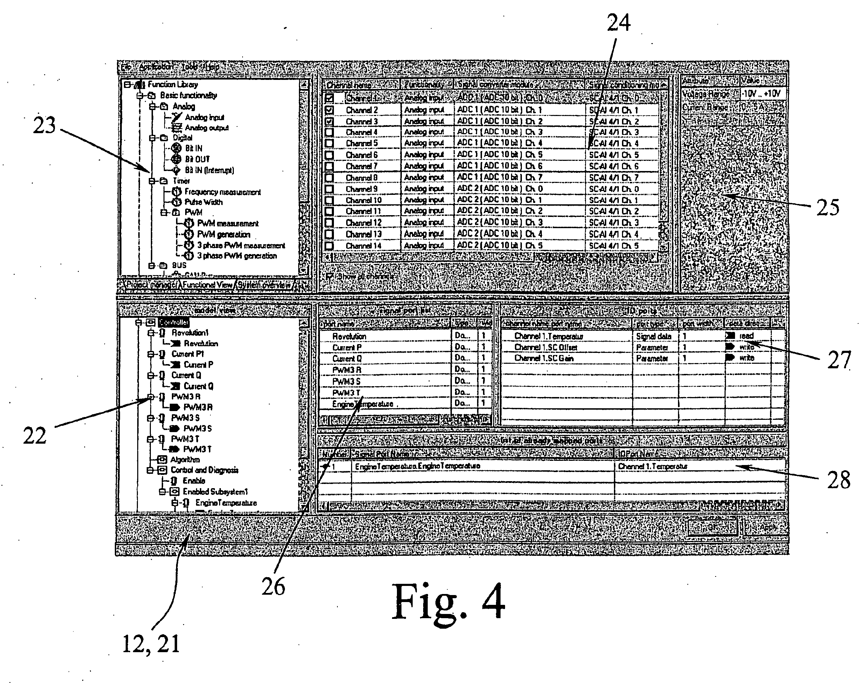

Fig. 4 zeigt ein Ausführungsbeispiel der Oberfläche eines Computerprogramms, das im Wesentlichen die Aufgaben der Konfigurationsumgebung 12 des erfindungsgemäßen, oben beschrieben Verfahrens, bzw. der Konfigurationseinrichtung 21 erfüllt. In einer Ansicht 22 zeigt die Konfigurationsumgebung 12 bzw. die Konfigurationseinrichtung 21 die Signale eines eingelesenen Blockdiagramms 6, wobei die Signale vorzugsweise in einer baumartigen Struktur derart aufgeführt werden, daß insbesondere die Struktur/Hierarchisierung des zugrundeliegenden Blockdiagramms 6 deutlich wird. Zusätzlich zu den Signalen und ihren Namen ist der Auflistung 22 vorzugsweise auch zu entnehmen, ob die Signale als Modell-I/O-Zugriffspunkte 10 verwendet werden, hier dargestellt durch nach rechts weisende, ausgefüllte Pfeilsymbole bzw. von links eingekerbte, ausgefüllte Rechtecke.

In einer weiteren Ansicht 23 werden die Komponenten und Eigenschaften des automatisch erkannten Steuerungssystems 2 und der zugeordneten I/O-Geräte 4 ebenfalls in einer Baumdarstellung angeordnet angezeigt. Die Übersicht nach 23 kann nach beliebigen Kriterien organisiert sein; dargestellt ist eine funktionale Sicht über das Steuerungssystem 2 und die zugeordneten I/O-Geräte 4, was sich beispielsweise darin äußert, daß die verfügbaren Timer des Steuerungssystems 2 nicht nur linear aufgelistet sondern ihrer funktionalen Verwendung gemäß gruppiert sind.

Eine weitere Ansicht 24 des erfindungsgemäßen Ausführungsbeispiels nach Fig. 4 vermittelt dem Nutzer eine vollständige Übersicht über die in dem Steuerungssystem verfügbaren Kanäle und deren Namen (linke Spalte), deren Basis-Funktionalität (zweite Spalte) und beschreibt darüber hinaus den Signalpfad zu anderen Modulen (z. B. Module zur Signalkonditionierung, rechte Spalte). Durch Markierung eines Listeneintrags in der Aufstellung 24 können in diesem Ausführungsbeispiel automatisch Informationen 25 zur grundsätzlichen Parametrierung der markierten I/O-Geräteeigenschaft abgerufen werden. Erfindungsgemäß bietet die Konfigurationsumgebung 12 bzw. die Konfigurationseinrichtung 21 die Möglichkeit, genau die Auswahl 26 an Signalen des Blockdiagramms 6 anzuzeigen, die als Modell-I/O-Zugriffspunkte 10 gekennzeichnet sind, genau wie auch nur die Auswahl 27 von I/O-Geräteeigenschaften darstellbar ist, die als zur Laufzeit des Gesamt-Steuerungsprogramms 1 veränderlich bzw. veränderbar festgelegt wurden. Durch diese reduzierte Listendarstellung ist es für den Benutzer auf besonders effektive Art und Weise möglich, eine verfahrensgemäße Zuordnung von I/O-Ports in Ansicht 27 auf Modell-I/O-Zugriffspunkte 10 in Ansicht 26 vorzunehmen. Der Zuordnungsvorgang an sich kann durch beliebige zur Verfügung stehende technische Mittel realisiert werden, insbesondere durch Auswahl der entsprechenden Einträge in den Listen 26 und 27 mittels elektronischer Zeigeinstrumente (Maus), oder auch durch Tastaturauswahl. Einander zugeordnete Modell-I/O-Zugriffspunkte 10 und I/O-Geräteeigenschaften bzw. I/O-Ports können in der Ausführungsvariante nach Fig. 4, vorzugsweise automatisch zur Erzielung einer besseren Übersicht, in einer separaten Liste 28 zusätzlich aufgeführt werden.

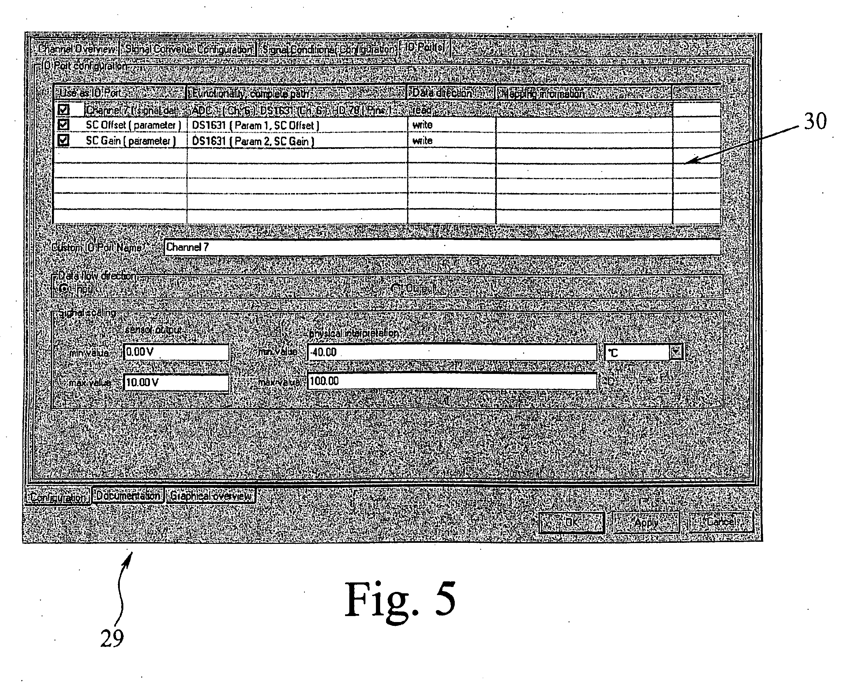

Fig. 5 zeigt das Ausführungsbeispiel eines Dialogfensters 29 zur vollständigen Parametrierung von I/O-Geräteeigenschaften (Kanäle, Parameter). In der dargestellten Auswahl 30 sind einzelne I/O-Geräteeigenschaften eines I/O-Geräts 4 erkennbar, wobei in der Darstellung jede I/O-Geräteeigenschaft durch Markierung über eine Checkbox als I/O-Port, also als laufzeitveränderlich gekennzeichnet werden kann. Durch Auswahl eines Listeneintrags in 30 kann nachfolgend vorzugsweise der Name der betreffenden I/O-Geräteeigenschaft, die Datenflußrichtung und spezifische Parameter festgelegt werden, dabei ist die Auswahl der von dem Dialogfenster 29 zur Verfügung gestellten Parameter von der Art des I/O-Geräts 4 abhängig, zu dem der jeweilige markierte Eintrag in Liste 30 gehört. Dialogfenster 29 kann z. B. Bestandteil der in Fig. 4 dargestellten Oberfläche der Konfigurationsumgebung 12 bzw. der Konfigurationseinrichtung 21 sein, es kann aber auch als ein davon losgelöstes Modul vorgesehen sein, das beispielsweise aufgerufen wird durch Menüauswahl in der Konfigurationsumgebung 12 bzw. der Konfigurationseinrichtung 21, oder auch durch die Tastaturbestätigung eines in Fig. 4 markierten Listeneintrags; die Erfindung ist aber nicht auf diese Arten der Benutzerführung beschränkt.

## Patentansprüche

1. Verfahren zur Erzeugung eines ausführbaren Gesamt-Steuerungsprogramms (1), insbesondere eines Meß-, Steuer-, Regel- und/oder Kalibrierungsprogramms, zur Steuerung eines Steuerungssystems (2) mit mindestens einer elektronischen Rechnereinheit (3) sowie mindestens einem zugeordneten I/O-Gerät (4), wobei mit Hilfe eines durch eine graphische Modellierungsumgebung (5) erstellten Blockdiagramms (6) mit mindestens einer Gliederungsebene, dessen Blöcke (7) durch Signallinien (8) zur Übertragung von Signalen verbunden werden, ein Funktions-Steuerungsprogramm (9) erzeugt wird,
**dadurch gekennzeichnet,**
**daß** mindestens eine Signallinie (8) bzw. ein Signal des Blockdiagramms (6) als symbolischer, hardwareunabhängiger Modell-I/O-Zugriffspunkt (10) für den Zugriff auf das I/O-Gerät (4) eindeutig **gekennzeichnet** wird, wobei der Modell-I/O-Zugriffspunkt (10) auch von einer unteren Gliederungsebene umfasst sein kann,
**daß** ein Übersetzungsprogramm das Blockdiagramm (6) unabhängig von dem Steuerungssystem (2) und/oder dem I/O-Gerät (4) und deren Eigenschaften in ein auf dem Steuerungssystem (2) ausführbares Funktions-Steuerungsprogramm (9) übersetzt, das durch Modell-I/O-Zugriffspunkte (10) verursachte korrespondierende Programm-I/O-Zugriffspunkte (11) aufweist,
**daß** mittels einer zusätzlichen Konfigurationsumgebung (12) ein I/O-Steuerungsprogramm (13) erzeugt wird, das zusammen mit dem Funktions-Steuerungsprogramm (9) das auf dem Steuerungssystem (2) lauffähige Gesamt-Steuerungsprogramm (1) bildet, wobei das Funktions-Steuerungsprogramm (9) über seine Programm-I/O-Zugriffspunkte (11) auf Elemente des I/O-Steuerungsprogramms (14) zugreift,
**daß** mittels der Konfigurationsumgebung (12) der Aktivierungszeitpunkt eines Programm-I/O-Zugriffspunktes (11) bzw. des korrespondierenden Elements des I/O-Steuerungsprogramms (14) unabhängig und abweichend von der signalfluß- und/oder zeit- und/oder ereignisgetriebenen Bearbeitungsreihenfolge des Blockdiagramms (6) vorgebbar ist.

2. Verfahren nach Anspruch 1, **dadurch gekennzeichnet, daß** mittels der Konfigurationsumgebung (12) der Aktivierungszeitpunkt eines Programm-I/O-Zugriffspunktes (11) bzw. des korrespondierenden Elements des I/O-Steuerungsprogramms (14) unabhängig und abweichend von der signalfluß- und/oder zeit- und/oder ereignisgetriebenen Bearbeitungsreihenfolge des Blockdiagramms (6) vorgebbar ist.

3. Verfahren nach einem der voranstehenden Ansprüche, **dadurch gekennzeichnet, daß** die Konfigurationsumgebung (12) das mit der Modellierungsumgebung (5) erstellte Blockdiagramm (6) oder eine andere Datenmenge, die die relevanten Informationen über das Blockdiagramm (6) beinhaltet, einliest und die darin enthaltenen Modell-I/O-Zugriffspunkte (10) erkennt und anzeigt.

4. Verfahren nach einem der voranstehenden Ansprüche, **dadurch gekennzeichnet, daß** die Konfigurationsumgebung (12) zur Erfassung/Veränderung des Blockdiagramms (6) der Modellierungsumgebung (5) über eine Modell-Schnittstelle (15) verfügt, die insbesondere dateibasiert und/oder als eine Programmierschnittstelle ausgestaltet ist bzw. eine Programmierschnittstelle der Modellierungsumgebung (5) nutzt.

5. Verfahren nach einem der voranstehenden Ansprüche, **dadurch gekennzeichnet, daß** die Konfigurationsumgebung (12) die Modell-I/O-Zugriffspunkte (10) tabellarisch und/oder in einer Baumstruktur gegliedert anzeigt, wobei insbesondere auch die Lage der Modell-I/O-Zugriffspunkte (10) in dem Blockdiagramm (6) dargestellt werden kann, insbesondere unter Berücksichtigung von Hierarchieebenen des Blockdiagramms (6).

6. Verfahren nach einem der voranstehenden Ansprüche, **dadurch gekennzeichnet, daß** die Konfigurationsumgebung (12) das dem Steuerungssystem (2) zugeordnete I/O-Gerät (4) und/oder das Steuerungssystem (2) und ihre/seine Eigenschaften automatisch erkennt und/oder daß mittel der Konfigurationsumgebung (12) durch den Benutzer das Steuerungssystem (2) und/oder das dem Steuerungssystem (2) zugeordnete I/O-Gerät (4) und/oder ihre/seine Eigenschaften vorgebbar und anzeigbar ist/sind.

7. Verfahren nach Anspruch 6, **dadurch gekennzeichnet, daß** die Konfigurationsumgebung (12) das I/O-Gerät (4) und seine Eigenschaften tabellarisch und/oder in einer Baumstruktur gegliedert anzeigt, wobei die Darstellung nach verschiedenen Kriterien geordnet sein kann, insbesondere gemäß der Topologie des Steuerungssystems (2) und der ihm zugeordneten I/O-Geräte (4, physikalische Sicht) und gemäß der Arten von I/O-Geräten (4, funktionale Sicht).

8. Verfahren nach einem der voranstehenden Ansprüche, **dadurch gekennzeichnet, daß** über die Konfigurationsumgebung (12) durch Benutzereingabe oder durch eine Programmierschnittstelle der Konfigurationsumgebung (12) die parametrierbaren Eigenschaften des I/O-Geräts (4) konfiguriert und die Signalpfade innerhalb eines I/O-Geräts (4) und/oder zwischen verschiedenen I/O-Geräten (4) festgelegt werden.

9. Verfahren nach einem der voranstehenden Ansprüche, **dadurch gekennzeichnet, daß** die Konfigurationsumgebung (12) fehlerhafte und/oder widersprüchliche Benutzereingaben erkennt und anzeigt.

10. Verfahren nach einem der voranstehenden Ansprüche, **dadurch gekennzeichnet, daß** über die Konfigurationsumgebung (12) durch Benutzereingabe und/oder durch eine Programmschnittstelle festgelegt wird, welche I/O-Geräteeigenschaften zur Laufzeit des Gesamt-Steuerungsprogramms (1) als I/O-Ports genutzt werden und welche eindeutige Kennzeichnung die I/O-Ports tragen.

11. Verfahren nach Anspruch 10, **dadurch gekennzeichnet, daß** mit Hilfe der Konfigurationsumgebung (12) durch Benutzereingabe und/oder eine Programmschnittstelle eine eindeutige Zuordnung von I/O-Ports der I/O-Geräte (4) auf die Modell-I/O-Zugriffspunkte (10) des Blockdiagramms (5) vorgenommen und damit festgelegt wird, welche Modell-I/O-Zugriffspunkte (10) und die damit korrespondierenden Programm-I/O-Zugriffspunkte (11) welche I/O-Funktionalität eines bestimmten I/O-Geräts (4) referenzieren.

12. Verfahren nach einem der voranstehenden Ansprüche, **dadurch gekennzeichnet, daß** auf dem Steuerungssystem (2) das Gesamt-Steuerungsprogramm (1), insbesondere auch die Konfigurationsumgebung (12) und insbesondere auch die Modellierungsumgebung (5), betrieben wird, wobei das durch das Verfahren erzeugte Gesamt-Steuerungsprogramm (1) vorzugsweise unter einem echtzeitfähigen Betriebsystem oder einem echtzeitfähigen Teil eines Betriebsystems des Steuerungssystems (2) betrieben wird, insbesondere wobei das Steuerungssystem (2) nur eine elektronische Rechnereinheit (3) aufweist, die die genannten Programme bzw. Anwendungen ausführt.

13. Verfahren nach einem der voranstehenden Ansprüche, **dadurch gekennzeichnet, daß** die Konfigurationsumgebung (12) unabhängig von der Modellierungsumgebung (5) betrieben werden kann.

14. Verfahren nach einem der voranstehenden Ansprüche, **dadurch gekennzeichnet, daß** das Steuerungssystem (2) ein Hostsystem (16), ein Zielsystem (17) und ein zugeordnetes I/O-Gerät (4) aufweist,
wobei Host- (16) und Zielsystem (17) und/oder Zielsystem (17) und I/O-Gerät (4) jeweils über eine oder mehrere Kommunikationsschnittstellen (18) in Verbindung stehen, insbesondere wobei auch Hostsystem (16) und I/O-Gerät (4) über mindestens eine Kommunikationsschnittstelle (18) in Verbindung stehen und Host- (16) und Zielsystem (17) jeweils mindestens eine elektronische Rechnereinheit (3) umfassen mit zumindest einer dem Hostsystem (16) zugeordneten Dateneingabe- und Datenanzeigeeinheit,
wobei die Modellierungsumgebung (5) und die Konfigurationsumgebung (12) vorzugsweise auf dem Hostsystem (16) ausgeführt werden und das mit dem Verfahren erstellte Gesamt-Steuerungsprogramm (1) vorzugsweise auf dem Zielsystem (17) betrieben wird.

15. Verfahren nach Anspruch 14, **dadurch gekennzeichnet, daß** das Betriebssystem des Hostsystems (16) ein Standardbetriebssystem ist, das es gestattet, die graphische Modellierungsumgebung (5) und/oder die Konfigurationsumgebung (12) zu betreiben.

16. Verfahren nach Anspruch 14 oder 15, **dadurch gekennzeichnet, daß** das Betriebssystem oder die Betriebssysteme des Zielsystems (17) echtzeitfähig ist bzw. sind, zwecks einer synchron zur physikalischen Zeit verlaufenden Beeinflussung der zugeordneten I/O-Geräte (4) und der mit ihnen verbundenen technischen Prozesse.

17. Verfahren nach einem der voranstehenden Ansprüche, **dadurch gekennzeichnet, daß** Modell-I/O-Zugriffspunkte (10) der graphischen Modellierungsumgebung (5) blockbasiert ausgeführt sind, insbesondere durch einen Signalportblock (19) mit mindestens einem eingangsseitigen und/oder mindestens einem ausgangsseitigen Signalport (20) zum Empfang und/oder zur Ausgabe von Signalen.

18. Verfahren nach Anspruch 17, **dadurch gekennzeichnet, daß** in mindestens eine Signallinie (8) des Blockdiagramms (6) mindestens ein Signalportblock (19) mit mindestens einem eingangsseitigen und einem korrespondierenden ausgangsseitigen Signalport (20) eingefügt wird, der Signalportblock (19) und seine Signalports (20) eindeutig **gekennzeichnet** werden und die Anzahl seiner Signalports (20) festgelegt wird.

19. Verfahren nach einem der voranstehenden Ansprüche, **dadurch gekennzeichnet, daß** als Modell-I/O-Zugriffspunkte (10) **gekennzeichnet**e Signale bzw. Signallinien (8) des Blockdiagramms (6) von ihrer Funktion her unbeeinflußt bleiben, insbesondere bei Verwendung von Blöcken (7) als Kennzeichnungsmittel von Modell-I/O-Zugriffspunkten (10) bedeutet dies, daß diese Signale durch den Signalportblock (19) unverändert und zeitlich unverzögert übertragen werden.

20. Verfahren nach einem der voranstehenden Ansprüche, **dadurch gekennzeichnet, daß** das Gesamt-Steuerungsprogramm (1) auf einer elektronischen Rechnereinheit (3) des Steuerungssystems (2) betrieben wird, wobei die elektronische Rechnereinheit (3) auf einer die sequentielle Datenverarbeitung unterstützenden Hardwaretechnologie, insbesondere auf Microcontrollern und/oder Prozessoren beruht und/oder wobei die elektronische Rechnereinheit (3) auf dem Einsatz programmierbarer Logikbausteine, insbesondere auf PROMs, PLAs, PALs und/oder FPGAs beruht.

21. Verfahren nach einem der voranstehenden Ansprüche, **dadurch gekennzeichnet, daß** der mittels der Konfigurationsumgebung (12) vorgebbare Zeitpunkt der Aktivierung eines Programm-I/O-Zugriffspunktes (11) bzw. des korrespondierenden Elements des I/O-Steuerungsprogramms (14) relativ zu anderen Programm-I/O-Zugriffspunkten (11) bzw. der korrespondierenden Elemente des I/O-Steuerungsprogramms (14) und/oder jeweils in Bezug auf ein Berechnungsintervall und/oder in Bezug auf die Laufzeit des Gesamt-Steuerungsprogramms (1) und/oder relativ zu einer anderen erfaßbaren Zeitbasis vorgebbar ist.

22. Verfahren nach einem der voranstehenden Ansprüche, **dadurch gekennzeichnet, daß** mittels der Konfigurationsumgebung (12) den Programm-I/O-Zugriffspunkten (11) bzw. den korrespondierenden Elementen des I/O-Steuerungsprogramms (14) Prioritäten zuweisbar sind, die bei gleichem Zeitpunkt der Aktivierung vorgeben, in welcher Reihenfolge gleichrangige Programm-I/O-Zugriffspunkte (11) bzw. die korrespondierenden Elemente des I/O-Steuerungsprogramms (14) bearbeitet werden.

23. Computerprogramm mit Programmcode-Mitteln, um alle mit Hilfe der Konfigurationsumgebung (12) vollzogenen Schritte gemäß der voranstehenden Ansprüche durchzufiihren, wenn das Programm auf einer Datenverarbeitungsanlage ausgeführt wird.

24. Computerprogramm mit Programmcode-Mitteln gemäß Anspruch 23, die auf einem computerlesbaren Datenträger gespeichert sind.

25. Konfigurationseinrichtung (21) zur Erzeugung eines I/O-Steuerungsprogramms (13) für ein Steuerungssystem (2) mit mindestens einem zugeordneten I/O-Gerät (4), wobei die Konfigurationseinrichtung (21) umfaßt:
eine Schnittstelle (15) zur Erfassung eines Blockdiagramms (6) mit Modell-I/O-Zugriffspunkten (10), das zur separaten, von dem Steuerungssystem (2) und/oder dem zugeordneten I/O-Gerät (4) unabhängigen Erzeugung eines Funktions-Steuerungsprogramms (9) mit korrespondierenden Programm-I/O-Zugriffspunkten (11) dient
und weitere Schnittstellen, über die das Steuerungssystem (2) und/oder das ihm zugeordnete I/O-Gerät (4) und deren bzw. dessen Eigenschaften automatisch erkennbar und/oder zuordenbar und anzeigbar sind,
wobei die Konfigurationseinrichtung (21) so ausgebildet ist, daß die in dem Blockdiagramm (6) als Modell-I/O-Zugriffspunkte (10) **gekennzeichnet**en Signale bzw. Signallinien (8) erkennbar und anzeigbar sind,
wobei die Konfigurationseinrichtung (21) so ausgebildet ist, daß parametrierbare Eigenschaften des Steuerungssystems (2) und/oder des I/O-Geräts (4) festlegbar und Steuerungssystem- und/oder I/O-Geräteeigenschaften zu Modell-I/O-Zugriffspunkten (10) zuordenbar sind und ein I/O-Steuerungsprogramm (13) für den Zugriff auf das Steuerungssystem (2) und das ihm zugeordnete I/O-Gerät (4) automatisch erzeugbar ist,
wobei die Elemente (14) des I/O-Steuerungsprogramms (13) mit Programm-I/O-Zugriffspunkten (11) des Funktions-Steuerungsprogramms (9) bei Ablauf auf dem Steuerungssystem (2) verknüpfbar sind.

26. Computerprogramm mit Programmcode-Mitteln, das alle Merkmale der Konfigurationseinrichtung (21) gemäß Anspruch 24 aufweist, wenn das Programm auf einer Datenverarbeitungsanlage ausgeführt wird.

27. Computerprogramm mit Programmcode-Mitteln gemäß Anspruch 26, die auf einem computerlesbaren Datenträger gespeichert sind.

## Claims

1. Method for generating an executable overall control program (1), in particular a measurement, control, regulating and/or calibration program, for controlling a control system (2) having at least one electronic computer unit (3) and at least one associated I/O device (4), a function control program (9) being generated with the aid of a block diagram (6) which is created using a graphical modelling environment (5) and has at least one organization level, the blocks (7) of said diagram being connected using signal lines (8) for transmitting signals,
**characterized**
**in that** at least one signal line (8) or signal of the block diagram (6) is clearly identified as a symbolic hardware-independent model I/O access point (10) for accessing the I/O device (4), the model I/O access point (10) also being able to be included in a lower organization level,
**in that**, in a manner independent of the control system (2) and/or the I/O device (4) and its/their properties, a translation program translates the block diagram (6) into a function control program (9) which can be executed on the control system (2) and has corresponding program I/O access points (11) caused by model I/O access points (10),
**in that** an additional configuration environment (12) is used to generate an I/O control program (13) which, together with the function control program (9), forms the overall control program (1) which can run on the control system (2), the function control program (9) using its program I/O access points (11) to access elements of the I/O control program (14),
**in that** the configuration environment (12) can be used to predefine the activation time of a program I/O access point (11) or of the corresponding element of the I/O control program (14) in a manner that is independent of and differs from the signal-flow-driven and/or time-driven and/or event-driven processing sequence of the block diagram (6).

2. Method according to Claim 1, **characterized in that** the configuration environment (12) can be used to predefine the activation time of a program I/O access point (11) or of the corresponding element of the I/O control program (14) in a manner that is independent of and differs from the signal-flow-driven and/or time-driven and/or event-driven processing sequence of the block diagram (6).

3. Method according to one of the preceding claims, **characterized in that** the configuration environment (12) reads in the block diagram (6), which has been created using the modelling environment (5), or another volume of data comprising the relevant information relating to the block diagram (6) and detects and displays the model I/O access points (10) contained therein.

4. Method according to one of the preceding claims, **characterized in that** the configuration environment (12) has a model interface (15) for detecting/changing the block diagram (6) of the modelling environment (5), said model interface being file-based, in particular, and/or being in the form of a programming interface or using a programming interface of the modelling environment (5).

5. Method according to one of the preceding claims, **characterized in that** the configuration environment (12) displays the model I/O access points (10) in tabular form and/or organized in a tree structure, the position of the model I/O access points (10) also being able to be represented, in particular, in the block diagram (6), in particular taking into account hierarchical levels of the block diagram (6).

6. Method according to one of the preceding claims, **characterized in that** the configuration environment (12) automatically detects the I/O device (4) associate with the control system (2) and/or the control system (2) and its/their properties, and/or **in that** the user can use the configuration environment (12) to predefine and display the control system (2) and/or the I/O device (4) associated with the control system (2) and/or its/their properties.

7. Method according to Claim 6, **characterized in that** the configuration environment (12) displays the I/O device (4) and its properties in tabular form and/or organized in a tree structure, the representation being able to be organized in accordance with different criteria, in particular in accordance with the topology of the control system (2) and of the I/O devices (4, physical view) associated with it and in accordance with the types of I/O devices (4, functional view).

8. Method according to one of the preceding claims, **characterized in that** the configuration environment (12) is used, by means of a user input or by means of a programming interface of the configuration environment (12), to configure the parameterizable properties of the I/O device (4) and to define the signal paths inside an I/O device (4) and/or between different I/O devices (4).

9. Method according to one of the preceding claims, **characterized in that** the configuration environment (12) detects and displays incorrect and/or conflicting user inputs.

10. Method according to one of the preceding claims, **characterized in that** the configuration environment (12) is used, by means of a user input and/or by means of a programming interface, to define which I/O device properties are used as I/O ports at the runtime of the overall control program (1) and which clear identification the I/O ports have.

11. Method according to Claim 10, **characterized in that** the configuration environment (12) is used, by means of a user input and/or a programming interface, to clearly assign I/O ports of the I/O devices (4) to the model I/O access points (10) of the block diagram (5) and to thus define which model I/O access points (10) and their corresponding program I/O access points (11) reference which I/O functionality of a particular I/O device (4).

12. Method according to one of the preceding claims, **characterized in that** the overall control program (1), in particular also the configuration environment (12) and in particular also the modelling environment (5), is operated on the control system (2), the overall control program (1) generated by the method preferably being operated under an operating system with real-time capability or a part, which has real-time capability, of an operating system of the control system (2), the control system (2) having, in particular, only one electronic computer unit (3) which executes said programs and/or applications.

13. Method according to one of the preceding claims, **characterized in that** the configuration environment (12) can be operated independently of the modelling environment (5).

14. Method according to one of the preceding claims, **characterized in that** the control system (2) has a host system (16), a target system (17) and an associated I/O device (4),
the host system (16) and the target system (17) and/or the target system (17) and the I/O device (4) respectively being connected by means of one or more communication interfaces (18), the host system (16) and the I/O device (4) also being connected, in particular, by means of at least one communication interface (18), and the host system (16) and the target system (17) each comprising at least one electronic computer unit (3) having at least one data input and data display unit that is associated with the host system (16),
the modelling environment (5) and the configuration environment (12) preferably being executed on the host system (16) and the overall control program (1) created using the method preferably being operated on the target system (17).

15. Method according to Claim 14, **characterized in that** the operating system of the host system (16) is a standard operating system which allows the graphical modelling environment (5) and/or the configuration environment (12) to be operated.

16. Method according to Claim 14 or 15, **characterized in that** the operating system or systems of the target system (17) has/have real-time capability for the purpose of influencing the associated I/O devices (4) and the technical processes associated with them in synchronism with physical time.

17. Method according to one of the preceding claims, **characterized in that** model I/O access points (10) of the graphical modelling environment (5) are designed to be block-based, in particular using a signal port block (19) having at least one input-side signal port (20) and/or at least one output-side signal port (20) for receiving and/or outputting signals.

18. Method according to Claim 17, **characterized in that** at least one signal port block (19) having at least one input-side signal port (20) and a corresponding output-side signal port (20) is inserted into at least one signal line (8) of the block diagram (6), the signal port block (19) and its signal ports (20) are clearly identified and the number of its signal ports (20) is defined.

19. Method according to one of the preceding claims, **characterized in that** the function of signals or signal lines (8) of the block diagram (6) which have been identified as model I/O access points (10) remains unaffected, and, when using blocks (7) as means of identifying model I/O access points (10), in particular, this means that these signals are transmitted by the signal port block (19) unchanged and without a time delay.

20. Method according to one of the preceding claims, **characterized in that** the overall control program (1) is operated on an electronic computer unit (3) of the control system (2), the electronic computer unit (3) being based on a hardware technology that supports sequential data processing, in particular on microcontrollers and/or processors, and/or the electronic computer unit (3) being based on the use of programmable logic chips, in particular on PROMS, PLAs, PALs and/or FPGAs.

21. Method according to one of the preceding claims, **characterized in that** the activation time of a program I/O access point (11) or of the corresponding element of the I/O control program (14) relative to other program I/O access points (11) or the corresponding elements of the I/O control program (14) can be predefined and/or can be respectively predefined with regard to a calculation interval and/or with regard to the runtime of the overall control program (1) and/or relative to another time base which can be recorded, said activation time being able to be predefined using the configuration environment (12).

22. Method according to one of the preceding claims, **characterized in that** the configuration environment (12) can be used to allocate priorities to the program I/O access points (11) or the corresponding elements of the I/O control program (14), said priorities predefining, in the case of an identical activation time, the order in which equal-ranking program I/O access points (11) or the corresponding elements of the I/O control program (14) are processed.

23. Computer program having program code means for carrying out all of the steps which are carried out using the configuration environment (12) according to the preceding claims if the program is executed on a data processing system.

24. Computer program having program code means according to Claim 23 which are stored on a computer-readable data storage medium.

25. Configuration device (21) for generating an I/O control program (13) for a control system (2) having at least one associated I/O device (4), the configuration device (21) comprising:
an interface (15) for detecting a block diagram (6) which has model I/O access points (10) and is used to separately generate a function control program (9) having corresponding program I/O access points (11) in a manner that is independent of the control system (2) and/or the associated I/O device (4),
and further interfaces which can be used to automatically detect and/or assign and display the control system (2) and/or the I/O device (4) associated with it and its or their properties,
the configuration device (21) being designed in such a manner that the signals or signal lines (8) which have been identified as model I/O access points (10) in the block diagram (6) can be detected and displayed,
the configuration device (21) being designed in such a manner that parameterizable properties of the control system (2) and/or of the I/O device (4) can be defined and control system and/or I/O device properties can be assigned to model I/O access points (10) and an I/O control program (13) for accessing the control system (2) and the I/O device (4) associated with it can be automatically generated,
the elements (14) of the I/O control program (13) being able to be linked to program I/O access points (11) of the function control program (9) when executed on the control system (2).

26. Computer program having program code means, which program has all the features of the configuration device (21) according to Claim 24 if the program is executed on a data processing system.

27. Computer program having program code means according to Claim 26 which are stored on a computer-readable data storage medium.

## Revendications

1. Procédé pour générer un programme de commande global exécutable (1), en particulier un programme de mesure, de commande, de réglage et/ou de calibrage, pour la commande d'un système de commande (2) comprenant au moins une unité de calcul électronique (3) ainsi qu'au moins un dispositif d'entrée-sortie associé (4), où, à l'aide d'un schéma fonctionnel (6) établi par un environnement de modélisation graphique (5), comprenant au moins un niveau de structure, dont les blocs (7) sont reliés par des lignes de signal (8) pour la transmission de signaux, un programme de commande fonctionnel (9) est généré,
**caractérisé en ce que**
au moins une ligne de signal (8) ou selon le cas au moins un signal du schéma fonctionnel (6) est **caractérisé**(e) sans ambiguïté en tant que point d'accès d'entrée-sortie de modèle (10), symbolique, indépendant du matériel, pour l'accès au dispositif d'entrée-sortie (4), où le point d'accès d'entrée-sortie de modèle (10) peut aussi être contenu dans un niveau de structure inférieur,
**en ce qu'**un compilateur compile le schéma fonctionnel (6), indépendamment du système de commande (2) et/ou du dispositif d'entrée-sortie (4) et de leurs propriétés, en un programme de commande fonctionnel (9) exécutable sur le système de commande (2), programme qui présente des points d'accès d'entrée-sortie de programme (11) correspondants, causés par des points d'accès d'entrée-sortie de modèle (10),
**en ce que**, au moyen d'un environnement de configuration supplémentaire (12), un programme de commande d'entrée-sortie (13) est généré, qui, conjointement avec le programme de commande fonctionnel (9), forme le programme de commande global (1) opérationnel sur le système de commande (2), où le programme de commande fonctionnel (9) accède, via ses points d'accès d'entrée-sortie de programme (11) à des éléments du programme de commande d'entrée-sortie (14),
**en ce que**, au moyen de l'environnement de configuration (12), l'instant d'activation d'un point d'accès d'entrée-sortie de programme (11), ou selon le cas de l'élément correspondant du programme de commande d'entrée-sortie (14), peut être spécifié indépendamment et en s'écartant de la séquence de traitement du schéma fonctionnel (6), commandée par le flux de signaux et/ou par le temps et/ou par les événements.

2. Procédé selon la revendication 1, **caractérisé en ce que**, au moyen de l'environnement de configuration (12), l'instant d'activation d'un point d'accès d'entrée-sortie de programme (11), ou selon le cas de l'élément correspondant du programme de commande d'entrée-sortie (14), peut être spécifié indépendamment et en s'écartant de la séquence de traitement du schéma fonctionnel (6), commandée par le flux de signaux et/ou par le temps et/ou par les événements.

3. Procédé selon l'une quelconque des revendications précédentes, **caractérisé en ce que** l'environnement de configuration (12) mémorise le schéma fonctionnel (6) établi avec l'environnement de modélisation (5), ou une autre quantité de données qui contiennent les informations pertinentes relatives au schéma fonctionnel (6), et **en ce qu'**il identifie et visualise les points d'accès d'entrée-sortie de modèle (10) qui y sont contenus.

4. Procédé selon l'une quelconque des revendications précédentes, **caractérisé en ce que** l'environnement de configuration (12) dispose, pour l'acquisition/la modification du schéma fonctionnel (6) de l'environnement de modélisation (5), d'une interface de modèle (15), qui, en particulier, est réalisée sur base d'un fichier et/ou sous la forme d'une interface de programmation, ou selon le cas utilise une interface de programmation de l'environnement de modélisation (5).

5. Procédé selon l'une quelconque des revendications précédentes, **caractérisé en ce que** l'environnement de configuration (12) visualise de façon ordonnée les points d'accès d'entrée-sortie de modèle (10) sous la forme d'une table et/ou dans une structure arborescente, où , en particulier, l'emplacement des points d'accès d'entrée-sortie de modèle (10) dans le schéma fonctionnel (6) peut également être visualisé, en particulier en tenant compte de niveaux hiérarchiques du schéma fonctionnel (6).

6. Procédé selon l'une quelconque des revendications précédentes, **caractérisé en ce que** l'environnement de configuration (12) identifie automatiquement le dispositif d'entrée-sortie (4) associé au système de commande (2) et/ou le système de commande (2) ainsi que leurs/ses propriétés, et/ou **en ce que**, au moyen de l'environnement de configuration (12), le système de commande (2) et/ou le dispositif d'entrée-sortie (4) associé au système de commande (2) et/ou leurs/ses propriétés peut/peuvent être spécifié(s) et visualisé(s) par l'utilisateur.

7. Procédé selon la revendication 6, **caractérisé en ce que** l'environnement de configuration (12) visualise de façon ordonnée le dispositif d'entrée-sortie (4) et ses propriétés sous la forme d'une table et/ou dans une structure arborescente, où la visualisation peut être ordonnée selon différents critères, en particulier selon la topologie du système de commande (2) et des dispositifs d'entrée-sortie qui lui sont associés (4, vue physique) et selon les types de dispositifs d'entrée-sortie (4, vue fonctionnelle).

8. Procédé selon l'une quelconque des revendications précédentes, **caractérisé en ce que** les propriétés paramétrables du dispositif d'entrée-sortie (4) sont configurées, par l'intermédiaire de l'environnement de configuration (12), par une introduction d'utilisateur, ou par une interface de programmation de l'environnement de configuration (12), et **en ce que** les chemins de signal, à l'intérieur d'un dispositif d'entrée-sortie (4) et/ou entre différents dispositifs d'entrée-sortie (4), sont définis.

9. Procédé selon l'une quelconque des revendications précédentes, **caractérisé en ce que** l'environnement de configuration (12) identifie et visualise des introductions d'utilisateur incorrectes et/ou contradictoires.

10. Procédé selon l'une quelconque des revendications précédentes, **caractérisé en ce qu'**est défini, par l'intermédiaire de l'environnement de configuration (12), par une introduction d'utilisateur, et/ou par une interface de programme, quelles propriétés de dispositifs d'entrée-sortie sont utilisées comme ports d'entrée-sortie pour la durée d'exécution du programme de commande global (1) et quelle caractérisation exempte d'ambiguïté les ports d'entrée-sortie portent.

11. Procédé selon la revendication 10, **caractérisé en ce que**, à l'aide de l'environnement de configuration (12), par une introduction d'utilisateur et/ou une interface de programme, des ports d'entrée-sortie des dispositifs d'entrée-sortie (4) sont associés sans ambiguïté aux points d'accès d'entrée-sortie de modèle (10) du schéma fonctionnel (5), et **en ce qu'**il est de ce fait défini quels points d'accès d'entrée-sortie de modèle (10) et quels points d'accès d'entrée-sortie de programme (11), qui leur correspondent, référencent quelle fonctionnalité d'entrée-sortie d'un dispositif d'entrée-sortie (4) déterminé.

12. Procédé selon l'une quelconque des revendications précédentes, **caractérisé en ce que** fonctionnent sur le système de commande (2) le programme de commande global (1), en particulier aussi l'environnement de configuration (12), et en particulier aussi l'environnement de modélisation (5), où le programme de commande global (1) généré par le procédé fonctionne de préférence sous un système d'exploitation temps réel ou sous une partie temps réel d'un système d'exploitation du système de commande (2), où, en particulier, le système de commande (2) ne présente qu'une unité de calcul électronique (3), qui exécute les programmes ou selon le cas applications mentionné(e)s.

13. Procédé selon l'une quelconque des revendications précédentes, **caractérisé en ce que** l'environnement de configuration (12) peut fonctionner indépendamment de l'environnement de modélisation (5).

14. Procédé selon l'une quelconque des revendications précédentes, **caractérisé en ce que** le système de commande (2) présente un système hôte (16), un système cible (17) et un dispositif d'entrée-sortie associé (4),
où le système hôte (16) et le système cible (17) et/ou le système cible (17) et le dispositif d'entrée-sortie (4) sont chaque fois en communication via une ou plusieurs interfaces de communication (18), où, en particulier, le système hôte (16) et le dispositif d'entrée-sortie (4) sont également en communication via au moins une interface de communication (18), et où le système hôte (16) et le système cible (17) comprennent chaque fois au moins une unité de calcul électronique (3) avec au moins une unité d'introduction de données et une unité d'affichage de données associées au système hôte (16),
où l'environnement de modélisation (5) et l'environnement de configuration (12) sont réalisés de préférence sur le système hôte (16) et où le programme de commande global (1) produit avec le procédé fonctionne de préférence sur le système cible (17).

15. Procédé selon la revendication 14, **caractérisé en ce que** le système d'exploitation du système hôte (16) est un système d'exploitation standard, qui permet d'exploiter l'environnement de modélisation graphique (5) et/ou l'environnement de configuration (12).

16. Procédé selon la revendication 14 ou 15, **caractérisé en ce que** le système d'exploitation ou les systèmes d'exploitation du système cible (17) est ou selon le cas sont un ou des système (s) temps réel, en vue d'une influence, s'exerçant de manière synchrone avec le temps physique, sur les dispositifs d'entrée-sortie associés (4) et les procédés techniques qui y sont liés.

17. Procédé selon l'une quelconque des revendications précédentes, **caractérisé en ce que** des points d'accès d'entrée-sortie de modèle (10) de l'environnement de modélisation graphique (5) sont réalisés sur base de blocs, en particulier par un bloc de ports de signal (19) avec au moins un port de signal (20) du côté entrée et/ou au moins un port de signal (20) du côté sortie pour la réception et/ou pour la sortie de signaux.

18. Procédé selon la revendication 17, **caractérisé en ce que**, dans au moins une ligne de signal (8) du schéma fonctionnel (6), au moins un bloc de ports de signal (19), avec au moins un port de signal (20) du côté entrée et un port de signal (20) correspondant du côté sortie, est inséré, **en ce que** le bloc de ports de signal (19) et ses ports de signal (20) sont **caractérisés** sans ambiguïté, et **en ce que** le nombre de ports de signal (20) du bloc de ports de signal (19) est défini.

19. Procédé selon l'une quelconque des revendications précédentes, **caractérisé en ce que** des signaux ou selon le cas des lignes de signal (8) du schéma fonctionnel (6), **caractérisé**(e)s en tant que points d'accès d'entrée-sortie de modèle (10), restent non influencé(e)s pour ce qui est de leur fonction, en particulier, ceci signifie que, lors de l'application de blocs (7) comme moyen de caractérisation de points d'accès d'entrée-sortie de modèle (10), ces signaux sont transmis inchangés et sans décalage temporel par le bloc de ports de signal (19).

20. Procédé selon l'une quelconque des revendications précédentes, **caractérisé en ce que** le programme de commande global (1) fonctionne sur une unité de calcul électronique (3) du système de commande (2), où l'unité de calcul électronique (3) est basée sur une technologie matérielle assistant le traitement de données séquentiel, en particulier sur des microcontrôleurs et/ou des processeurs, et/ou où l'unité de calcul électronique (3) est basée sur la mise en oeuvre d'éléments logiques programmables, en particulier sur des PROM, PLA, PAL et/ou FPGA.

21. Procédé selon l'une quelconque des revendications précédentes, **caractérisé en ce que** l'instant d'activation d'un point d'accès d'entrée-sortie de programme (11), ou selon le cas de l'élément correspondant du programme de commande d'entrée-sortie (14), instant qui peut être spécifié au moyen de l'environnement de configuration (12), peut être spécifié relativement à d'autres points d'accès d'entrée-sortie de programme (11), ou selon le cas relativement aux éléments correspondants du programme de commande d'entrée-sortie (14), et/ou, chaque fois, quant à un intervalle de calcul, et/ou quant à la durée d'exécution du programme de commande global (1), et/ou relativement à une autre base de temps qui peut être acquise.

22. Procédé selon l'une quelconque des revendications précédentes, **caractérisé en ce que**, au moyen de l'environnement de configuration (12), des priorités peuvent être assignées aux points d'accès d'entrée-sortie de programme (11) ou selon le cas aux éléments correspondants du programme de commande d'entrée-sortie (14), priorités qui, dans le cas d'un instant d'activation identique, spécifient dans quel ordre des points d'accès d'entrée-sortie de programme (11) de même niveau, ou selon le cas les éléments correspondants du programme de commande d'entrée-sortie (14), sont traités.

23. Programme d'ordinateur avec des moyens de code de programme pour exécuter, selon les revendications précédentes, toutes les étapes réalisées à l'aide de l'environnement de configuration (12), lorsque le programme est exécuté sur une installation de traitement de données.

24. Programme d'ordinateur avec des moyens de code de programme selon la revendication 23, moyens qui sont mémorisés sur un support de données lisible par un ordinateur.

25. Dispositif de configuration (21) pour générer un programme de commande d'entrée-sortie (13) pour un système de commande (2), avec au moins un dispositif d'entrée-sortie associé (4), où le dispositif de configuration (21) comprend :
une interface (15) pour l'acquisition d'un schéma fonctionnel (6), avec des points d'accès d'entrée-sortie de modèle (10), qui sert à la génération séparée, indépendante du système de commande (2) et/ou du dispositif d'entrée-sortie associé (4), d'un programme de commande fonctionnel (9) avec des points d'accès d'entrée-sortie de programme correspondants (11)
et d'autres interfaces, par lesquelles le système de commande (2) et/ou le dispositif d'entrée-sortie (4) qui lui est associé, et leurs ou selon le cas ses propriétés, peuvent être identifiés et/ou associés et visualisés de manière automatique,
où le dispositif de configuration (21) est développé de façon que les signaux ou selon le cas les lignes de signal (8), **caractérisé**(e)s dans le schéma fonctionnel (6) en tant que points d'accès d'entrée-sortie de modèle (10), puissent être identifié(e)s et visualisé(e)s,
où le dispositif de configuration (21) est développé de façon que des propriétés paramétrables du système de commande (2) et/ou du dispositif d'entrée-sortie (4) puissent être définies, et que des propriétés du système de commande et/ou de dispositifs d'entrée-sortie puissent être associées à des points d'accès d'entrée-sortie de modèle (10), et qu'un programme de commande d'entrée-sortie (13) puisse être généré de manière automatique pour l'accès au système de commande (2) et au dispositif d'entrée-sortie (4) qui lui est associé,
où les éléments (14) du programme de commande d'entrée-sortie (13) peuvent être associés à des points d'accès d'entrée-sortie de programme (11) du programme de commande fonctionnel (9) lors d'un déroulement sur le système de commande (2).

26. Programme d'ordinateur avec des moyens de code de programme qui présente toutes les caractéristiques du dispositif de configuration (21) selon la revendication 24, lorsque le programme est exécuté sur une installation de traitement de données.

27. Programme d'ordinateur avec des moyens de code de programme selon la revendication 26, moyens qui sont mémorisés sur un support de données lisible par un ordinateur.
